(19) Europäisches Patentamt
European Patent Office
Office européen des brevets

(11) **EP 1 587 704 B1**

(12) **EUROPEAN PATENT SPECIFICATION**

(45) Date of publication and mention
of the grant of the patent:
**09.09.2009 Bulletin 2009/37**

(21) Application number: **03702540.0**

(22) Date of filing: **27.01.2003**

(51) Int Cl.:
**B60K 28/16** *(2006.01)*  **B60T 8/00** *(2006.01)*

(86) International application number:
**PCT/EP2003/000807**

(87) International publication number:
**WO 2004/067307 (12.08.2004 Gazette 2004/33)**

(54) **METHOD, SYSTEM AND COMPUTER PROGRAM PRODUCT FOR WHEEL SLIP CONTROL**

METHODE, SYSTEM UND COMPUTERPROGRAMMPRODUKT FÜR RADSCHLUPFREGELUNG

PROCEDE, SYSTEME ET PRODUIT-PROGRAMME INFORMATIQUE DE REGULATION DE PATINAGE DE ROUE

(84) Designated Contracting States:
**DE ES FR GB IT SE**

(43) Date of publication of application:
**26.10.2005 Bulletin 2005/43**

(73) Proprietor: **Nira Dynamics AB
583 30 Linköping (SE)**

(72) Inventors:
• **GUSTAVSSON, Fredrik
S-58666 Linköping (SE)**
• **FORSSELL, Urban
S-586 66 Linköping (SE)**
• **TÖRMÄNEN, Mikael
S-43144 Mölndal (SE)**
• **ENGBOM, Johan
S-414 57 Göteborg (SE)**
• **GRANSTRÖM, Magnus
S-411 27 Göteborg (SE)**

(74) Representative: **Niederkofler, Oswald et al
Samson & Partner
Patentanwälte
Widenmayerstrasse 5
80538 München (DE)**

(56) References cited:
**DE-A- 3 735 673**      **GB-A- 2 262 818**
**US-A- 4 947 332**      **US-A- 5 135 290**
**US-A- 5 353 225**      **US-A- 5 519 617**

• **KABGANIAN M ET AL: "A new strategy for traction control in turning via engine modeling" IEEE TRANS. VEH. TECHNOL.;IEEE TRANSACTIONS ON VEHICULAR TECHNOLOGY NOVEMBER 2001, vol. 50, no. 6, November 2001 (2001-11), pages 1540-1548, XP002254641**
• **LIU YONG ET AL: "Target slip tracking using gain-scheduling for antilock braking systems" PROCEEDINGS OF THE 1995 AMERICAN CONTROL CONFERENCE. PART 2 (OF 6); SEATTLE, WA, USA JUN 21-23 1995, vol. 2, 1995, pages 1178-1182, XP002254642 Proc Am Control Conf;Proceedings of the American Control Conference 1995**

EP 1 587 704 B1

**Description**

## FIELD OF THE INVENTION

The present invention relates to wheel speed control of a vehicle, and more particularly to a method, a system and a computer program product for carrying out a spin or slip control on one or more vehicle wheels or other type of driven wheels. DE 37 35 673 A1 describes the background art. Values at an operating point on the slip-friction force curve are estimated. A parametric slip-friction force model is not used.

## BACKGROUND OF THE INVENTION

The automobile industry is one of the biggest and most competitive industries today. There are many actors and an abundance of different cars aimed at a highly diversified market and great efforts are made to improve performance and safety in the products without reducing profits. One strategy for doing this is to develop systems that easily can be implemented in different cars and adapted to the customers' wishes. An example of this is the so called ABS-systems (anti-blocking system) that often are developed by one specific company and then sold to many different car manufactures but properly adjusted to differences in vehicle characteristics such as vehicle mass and engine performance and customer preference such as desired comfort. Therefore, there is a need to develop a *Vehicle Stability System* with this strategy in mind.

A vehicle is exposed to many different forces during driving. The sum of those forces will decide how the vehicle will behave. The driver controls the vehicle trajectory by controlling the engine torque through the accelerator, changing the steering angle, braking and/or using the clutch. However, the effects of the actions taken by the driver will depend on environmental conditions such as tire-ground traction, slopes and temperature. This implies that the driver has to make a judgement of the environment before taking action. Sometimes this judgement is difficult to make correctly and this is where the vehicle stability systems comes in play. The most familiar Vehicle Stability System is probably the ABS-brakes which is used for optimising the braking force depending on the ground conditions independently (the ABS-system cannot increase the braking force, only reduce it) of the braking force requested by the driver.

Other vehicle properties that are of interest to control are *slip, slide* and *skid*. Slip is essentially defined as the speed difference between the vehicle and the driven wheel and its value will decide the longitudinal and lateral forces from the wheels acting on the vehicle. Slide is defined as the vehicles behaviour while cornering (*under-* and *oversteer*) and is partly dependent of the slip. Skid is here used to denote the unstable state when all the vehicle tires has lost their traction ability and the vehicle is out of control. There are many different systems available today on the market that tries to control those properties. Examples pertaining to the prior art are the Volvo systems TRACS, DSA and DSTC. They are quite different in their configuration and will not be further discussed here.

One purpose of vehicle stability systems such as an anti-slip system is to control the wheel speeds of a vehicle and by doing so, achieve optimal acceleration and handling. This is done in the prior art systems with empirically developed controllers, which are usually implemented as large finite state machines based on look-up tables using the engine and/or the brakes as actuator. Since the parameters of the anti-slip systems normally are configured for different driving conditions and vehicle specific, properties, the implementation of the systems in new platforms has shown to be time-consuming and costly.

## OBJECT OF THE INVENTION

It is an object of the present invention to provide an improved method, computer program product for carrying out the method and a system for wheel speed control in vehicles. It is a further object to provide a method and a system for tire slip control with the aim to increase flexibility and decrease costs and time for implementation in different types of vehicles.

## SUMMARY OF THE INVENTION

The invention provides a method for controlling the wheel slip on a vehicle, in particular carrying out anti-slip, anti-spin or ABS control, comprising the steps of obtaining at least one dynamical state parameter of the vehicle, adaptively estimating parameters of a parametric slip-friction force model of the vehicle, determining a slip reference value indicative of the wheel slip at a determined driveline torque from a dynamic model of the relevant vehicle components which comprises the adaptive parametric slip-friction force model, and controlling the driveline torque of the vehicle by determining a torque manipulation signal based on the dynamical state parameters and the slip reference value.

According to another aspect, the invention provides a method for determining the traction force of a tire on a vehicle, in particular in combination with one of the preceding methods, based on a slip-friction model according to the

**EP 1 587 704 B1**

formula $F_{trac} = \mu(\lambda)F_z$, where $\mu$ is a friction value, $\lambda$ is a tire slip value, $F_{trac}$ is a traction force, $F_z$ is the vertical load on a wheel and $\mu(\lambda)$ is a slip curve according to the slip-friction model.

According to still another aspect, the invention provides a system for controlling the wheel slip on a vehicle, comprising a device for obtaining at least one dynamical state parameter of the vehicle, a device for adaptively estimating parameters of a parametric slip-friction force model of the vehicle, a device for determining a lip reference value indicative of the wheel slip at a determined driveline torque from a dynamic model of the relevant vehicle components which comprises the adaptive parametric slip-friction force model, and a device for controlling the driveline torque of the vehicle by determining a torque manipulation signal based on the dynamical state parameters and the slip reference value.

According to yet another aspect, the invention provides a computer program product including program code for carrying out a digital signal processing method, when executed on a computer system, for controlling the wheel slip on a vehicle, comprising a device for obtaining at least one dynamical state parameter of the vehicle, adaptively estimating parameters of a parametric slip-friction force model of the vehicle, determining a slip reference value indicative of the wheel slip at a determined driveline torque from a dynamic model of the relevant vehicle components which comprises the adaptive parametric slip-friction force model, and a device for controlling the driveline torque of the vehicle by determining a torque manipulation signal based on the dynamical state parameters and the slip reference value.

The invention is applicable for and adaptable to all kinds of vehicles carried on pneumatic tires, such as cars, motorcycles, lorries or trucks having any number of wheels in accordance with the different embodiments and further aspects described in the detailed description.

**BRIEF DESCRIPTION OF THE DRAWINGS**

The present invention will be further explained by means of exemplifying embodiments in conjunction with the accompanying drawings, in which the figures schematically show:

FIG. 1    Diagram of a complete system environment

FIG. 2    Diagram illustrating the internal signal routing in vehicle. (The dash-dotted arrows indicate the route while using xPC Target).

FIG. 3    Table of torque reduction actions, which are performed in a fuel blocking component.

FIG. 4    Table comprising principal patterns for the different actions in a fuel blocking component. Non-blocked cylinders are indicated by (0), blocked cylinders are indicated by (1).

FIG. 5    Table showing an example of an action sequence of a fuel blocking component. Performed sequence (bold) and planned sequence (regular). The pattern for the applied action is underlined.

FIG. 6    Schematic view of a spark ignition engine.

FIG. 7    Diagram of the engine delay as function of the engine speed.

FIG. 8    Schematic view of a three state model of a vehicle driveline.

FIG. 9    Schematic view of a tire seen from above with slip-angle $\alpha$.

FIG. 10    Diagram of the slip curve with linear (a), non-linear (b) and unstable (c) regions (thermal (solid) and isothermal (dashed)). The traction parameter $\square$ is diagramted as function of the slip parameter $\square$.

FIG. 11    Schematic description of a single wheel model.

FIG. 12    Schematic description of a stiff driveline model.

FIG. 13    Diagram of the relationship between the real slip curve (dashdotted) and the approximation used in the controller (solid).

FIG. 14    Validation of $G_{norm}(s)$. Model output (dash-dotted) compared with measured data of slip (solid).

FIG. 15    Validation of $G_{abs}(s)$. Model output (dash-dotted) compared with measure data of $\Delta v$ (solid).

3

FIG. 16    Block diagram of the principal structure of a controller

FIG. 17    Diagram of the step response for a closed loop system controlled with a IMC designed controller. Lows □ (dash-dotted), "good" □ (solid), high □ (dashed).

FIG. 18    Schematic diagram of the Ackerman compensation.

FIG. 19    Diagrams depicting the system identification. Measured output from vehicle (solid), model output (dash -dotted). The vehicle is hanging in mid-air to eliminate ground influence. The values on axes are raw binary data.

FIG. 20    Diagram of the slip curve for gravel.

FIG. 21    Diagram showing an estimation *of* $k_{slip}$ while driving from asphalt onto gravel with winter tires.

FIG. 22    Diagram showing the slip as function of time for a full throttle take-off with DSA, initial engine speed 3000 RPM.

FIG. 23    Diagram showing the slip as function of time for a full throttle take-off with DSA, initial engine speed 3000 RPM.

FIG. 24    Diagram showing the slip as function of time for a full throttle take-off with NSC 2. Initial engine speed 3000 RUM.

FIG. 25    Diagram showing the slip as function of time for a full throttle take-off with NSC 2. Initial engine speed 3000 RPM.

FIG. 26    Diagram showing the slip as function of time for a full throttle acceleration with DSA from 30 to 60 km/h.

FIG. 27    Diagram showing the slip as function of time for a full throttle acceleration with DSA from 30 to 60 km/h.

FIG. 28    Diagram showing the slip as function of time for a full throttle acceleration with NSC 2 from 30 to 60 km/h.

FIG. 29    Diagram showing the slip as function of time for a full throttle acceleration with NSC 2 from 30 to 60 km/h.

FIG. 30    Diagram showing the slip as function of time for cornering with DSA.

FIG. 31    Diagram showing the slip as function of time for cornering with DSA.

FIG. 32    Diagram showing the slip as function of time for cornering with NSC 2.

FIG. 33    Diagram showing the slip as function of time for cornering with NSC 2.

FIG. 34    Diagram showing the slip as function of time in an acceleration lane with DSA.

FIG. 35    Diagram showing the slip as function of time in an acceleration lane with the controller of the invention.

FIG. 36    Block diagram of a further embodiment of the control structure of the invention.

FIG. 37    Diagram of a friction ellipse showing how the total friction force can be split up between lateral and longitudinal forces.

FIG. 38    Diagram showing how the slip reference $s_{ref}$ is computed from $\square_{x,ref}$.

FIG. 39    Three diagrams, where the first diagram shows the noise-free and noisy slip in an anti-slip state, the second diagram shows a true slip curve (solid), an initial guess (dotted) and a final estimated curve (dashed) using noisy slip measurements, and the third diagram shows the parameter convergence.

FIG. 40    Four diagrams, where the first diagram shows the convergence to $s_{max}, \mu_{max}$ from different initial states, the second diagram shows the convergence to $r,n$ from different initial states, the third diagram shows initial slip curves, and the fourth diagram shows final estimated slip curves.

FIG. 41   The left diagram shows the trajectory for $s$ and $\mu$ on left and right driven wheel, respectively, during a drive with fully developed spin. The first subdiagram for static data, and the second subdiagram for LP-filtered $\mu$. The right diagrams show time diagrams of $s$ and $\mu$ and the estimated slip curve. Three different test drives are compared in the different rows.

## DETAILED DESCRIPTION OF THE EMBODIMENTS

Many of the advantages of the present invention will be readily appreciated and become better understood by reference to the following detailed description when considered in connection with the accompanying drawings. However, before proceeding further with the detailed description a few general observations are made to improve understanding of the present invention.

### [Model-based Control]

The known anti-slip systems on the market today are typically empirically developed controllers based on look-up tables with large numbers of parameters. The parameters of the controllers are normally dependent of the operating conditions such as gear, friction and velocity. When such a system is to be adapted to a new platform an extensive testing procedure is required to tune the controller with regard to the new vehicles properties.

A particular advantage of using model-based control is the flexibility of the resulting control system. The idea is to develop a general parametric control system that can run on any comparable platform of known characteristics without any significant loss of performance. In model-based control the number of parameters to be trimmed is substantially lower and thus it is easier and less time consuming to adjust the controller to a new platform.

### [Strategy]

When developing model-based controllers it is necessary to first make a survey of the behaviour of the system to be controlled. This includes not only its physical and dynamic properties but also how the system environment is configured in a broader sense. The questions to be answered are among others:

- What types of sensors are available?
- How will the data be transferred?
- What is the limitation in processor power for the controller?
- What type of actuator strategy should be used?
- What other systems is the controller dependent of?
- In what environment is the system meant to function?
- What are the cases to handle?

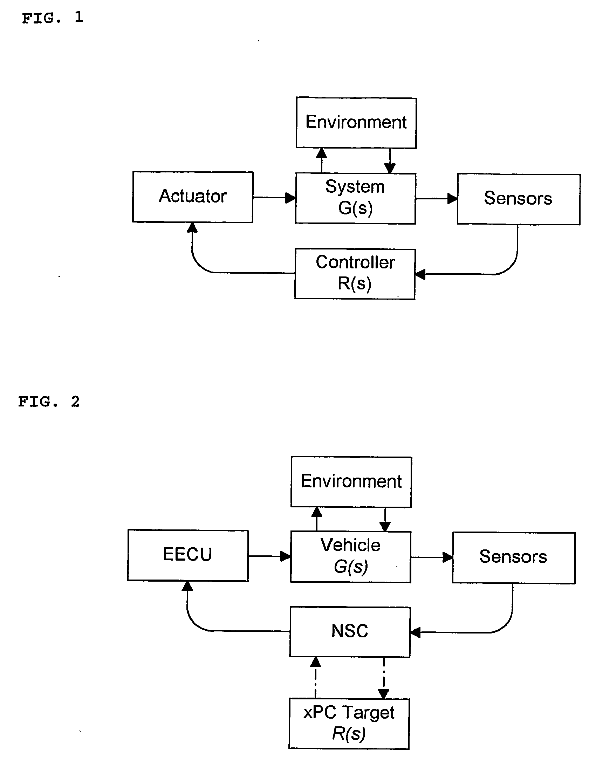

When these questions have been answered a scheme for the complete system environment can be established as illustrated in FIG. 1. The anti-slip system can be divided in two subsystems, the controller and the reference value calculator. The suggested controller was developed using Internal Model Control (IMC). The reference value calculator was of secondary interest in this study and the version used in the implementation was just for evaluating the performance of the controller.

When the complete system environment has been established the components can be characterised and modelled in a simulation environment to reproduce the behaviour of the real system. From this mathematical model a controller can be derived by using a combination of model-based techniques and logic as described hereinafter. This controller can be evaluated in a simulated environment and if it seems to have promising qualities then tested on a real system.

When the controller is implemented it is often necessary to change some of its parameters to compensate for un-modelled dynamics and other disturbances, especially if the controlled system is hard to describe. This implies that it is often rewarding to begin with quite simple methods where changes in parameters and configuration are easily performed and interpreted.

### [The Volvo V40 T4 Environment]

In this embodiment a Volvo V40 T4 was used as platform during development of the controller and the system environment was configured as in FIG. 2. This embodiment is an approach to implement model-based anti-slip control and is mainly limited by the scarce amount of available signals in the V40. Thus, the system is to be kept simple to make it possible to evaluate its performance under real driving conditions. In the future, as the amount of available signal in cars rise through the use of CAN-buses and additional sensors such as accelerometers, the anti-slip system could be upgraded to take these in count.

A Model-based Anti-slip Controller (MASC) according to the present embodiment has the potential to reduce complexity and implementation time, and make use of possible information from other systems (such as friction estimation) and non-standard sensors. The idea is to use a model-based control system, which in this case include: a dynamic model of the tires, driveline and car body, a state estimator (Kalman filter) to compute the vehicle states and a cascade coupled controller to reduce the engine torque during fully developed spin.

Here the actuator has been replaced by the actuator control system, the Engine Electronic Control Unit (EECU), since it seems more logical to implement the engine as a component in the vehicle. The term NSC is here used to denote the ECU for the anti-slip system. In the present embodiment of the system the anti-slip algorithm is be placed here. However, while developing the controller the NSC only served as a communication node for all data traffic between the vehicle and a rapid-prototyping tool, xPC Target, running on an external PC. The EECU, NSC, sensors and some actuator related subjects are described hereinafter. The main part of the system environment is the actual vehicle or *G (s)* and its operational environment.

**[ENGINE ECU AND SENSORS]**

This section deals with the parts of the system environment that concerns the generation of the torque reduction requested by the controller and information about the various electronic devices in the vehicle used for data collecting, transfer and treatment.

**[Engine ECU-EECU]**

The EECU receives the control signal from the anti-slip system and its task is to force the engine to reduce the torque. There are three basic methods for doing this, by controlling the throttle-angle, by controlling the ignition angle or by blocking the fuel to the cylinders. In the presented embodiments, fuel blocking is preferably used for controlling the driveline torque e.g. engine torque but the controller could use any (or combinations) of the suggested methods, although its performance might be reduced. Another powerful method of controlling the slip would be to use the brakes to bring down the wheel speeds. However, this is quite hazardous and difficult to implement and it will also lead to that the anti-slip system would become classified as a safety system with much higher specification requirements to meet.

[Fuel Blocking]

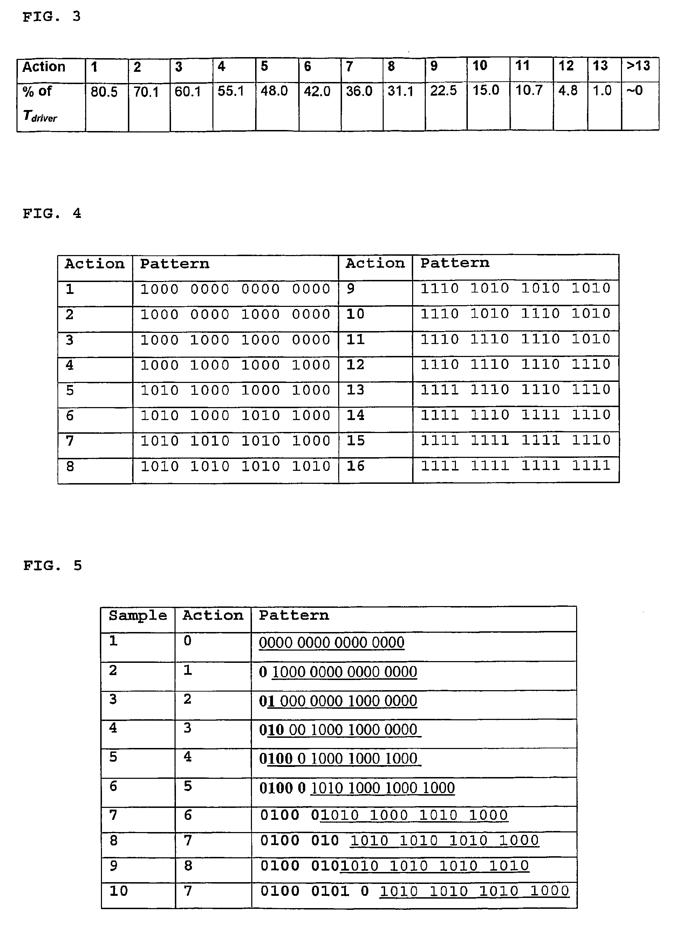

The fuel blocking control technique is based on series of so-called actions. An action is named after how many cylinders that are blocked in an imagined sequence of cylinders (16 cylinders or eight engine revolutions in the case of the V40). This implies that this technique does not allow the engine to deliver the desired torque reduction in a continuous form. The torque reduction has to be quantified to correspond to a specific action at the current engine torque requested by the driver, $T_{driver}$. A table, which lists the torque reduction percentage for each action is given in FIG. 3. The procedure is easiest explained by a simple example.

Example: Say that $T_{driver}$ equals 200 Nm and that the controller suggests a torque reduction of 83 Nm. This means that the desired torque output from the engine $T_e$ equals 117 Nm, that is 58.5 % of $T_{driver}$. The closest value in the action table (FIG. 3) is action 3 that gives 60.1 % so action 3 is sent to the engine control system.

The values found in the table of FIG. 3 were empirically estimated by measuring the vehicle acceleration at full throttle with different fixed actions set. The values for action 14-16 are very uncertain and depend on the prevailing throttle position (a small throttle angle probably gives a negative torque due to low pressure in the intake).

Each action is associated with a certain pattern of blocked cylinders. When a sequence of actions is sent to the EECU their patterns are carefully fitted to each other to keep the same cylinders blocked as long as possible. This technique is referred to as cascade control. It is well known that unnecessary toggling between blocking and non-blocking for a cylinder will lead to a sub-optimal air-fuel mix (stochiometric ratio) with undesired phenomena such as very hot exhaust gases and wear on the catalyst as consequence. The principal patterns for the different action are presented in the table of FIG. 4.

If a sequence of actions is sent to the EECU the pattern-fitting algorithm results in a somewhat strange sequence of blocked and non-blocked cylinders as shown in the table of FIG. 5. The resulting pattern implies that the engine only can produce the desired torque in a broad statistical sense. At low engine speeds it will be possible to send actions to the EECU even faster than they are possible to execute due to the large engine delay later described. This will lead to even more disturbances in the blocking sequence and more uncertainty regarding the resulting engine torque.

**[Sensors & Signals]**

The sensors for measuring dynamical state parameters of the vehicle such as wheel speed, engine torque, vehicle speed, vehicle traction, etc., are all ready existing sensors in the standard edition of the Volvo V40. The signals used are found in almost any vehicle on the market today.

[ABS]

The wheel speeds were measured by the ABS-system. The sampling was performed at a rate of 200 Hz and the signal could be seen as quite accurate. However, the signal will be rather noisy due to the wheels exposure to environmental changes.

[EECU]

The EECU measures the engine torque and speed and combines them in a Pulse Width and Frequency Modulated-signal sent at 50 Hz. The torque signal is the most uncertain due to the fact that its value is taken from a static map of steady-state torques. When the driver demands rapid changes in torque the signal will be far from accurate. In addition to this the signal will be multiplied with the values in table of FIG. 3 when there are actions present.

[Filtering]

Before the signals are used for calculations they have to be filtered in order to get rid of unwanted noise from the measuring process. It is assumed that the major part of this noise is of higher frequencies, at least it is safe to say that the "real" signal do not contain very high frequencies (this is normally the case with physical systems). Therefore a low-pass filter is applied to reduce the noise influence. When filtering signals there is always a trade-off to be made between the desire to have a short rise time for the system in order to detect rapid changes (here e.g. ice patches), and the necessity to block out high frequency disturbances. In order to achieve this an Infinite Impulse Response (IIR) filter is the natural choice. The down side with the IIR filters is that they all have a more or less non-linear phase. The Non-linear phase tends to delay signals differently as they pass through the filter depending on their frequencies. This phenomenon can give rise to strange impulse responses (for further information see [10] or any signal processing textbook) and is thus not desirable. In this embodiment of the invention a Butterworth filter has been chosen because of its not so non-linear phase.

**[Data Treatment]**

[NSC]

For normal use all the calculations are performed in the NSC. However, during the development of the controller it was only used as a communication node for the information exchange between the ABS, EECU and the xPC Target system.

[xPC Target]

xPC Target is a toolbox developed by MathWorks for rapid prototyping of real time applications. It gives the possibility to have SIMULINK® models on a PC (Host) and from this model generate C-code. The code could then be compiled and downloaded into another PC (Target) running a simple real-time kernel. This gives the possibility to make changes in system configuration and parameter settings and easily observe how various signals flow through the model. The SIMULINK® model is easily modified and downloaded to the target computer and thus several different strategies can quickly be tested in the real system.

In order for this to work properly, the communication between the Target PC and in this case the NSC has to be established. For this predefined SIMULINK® blocks are available in the xPC Target toolbox. The communication routine used for this application is a RS-232 serial communication and the data was sent from the NSC to the Target PC with 2 bytes precision. Signals sent from the NSC to the Target PC were:

- Mean value of the driven wheel speeds
- Both the free rolling wheel speeds
- Engine rotation speed
- Engine torque

When the calculations in the Target PC were done, an action was sent back from the Target PC to the NSC.

**[SYSTEM DESCRIPTION & MODELLING]**

One requirement of model-based control development is an accurate model of the studied system, which preferably is a front wheel driven, four cylinder, spark-ignition engine car.

Furthermore, it is of great importance to choose a model that captures the main characteristics of the system without becoming too large to handle in simulations and control applications.

**[Engine]**

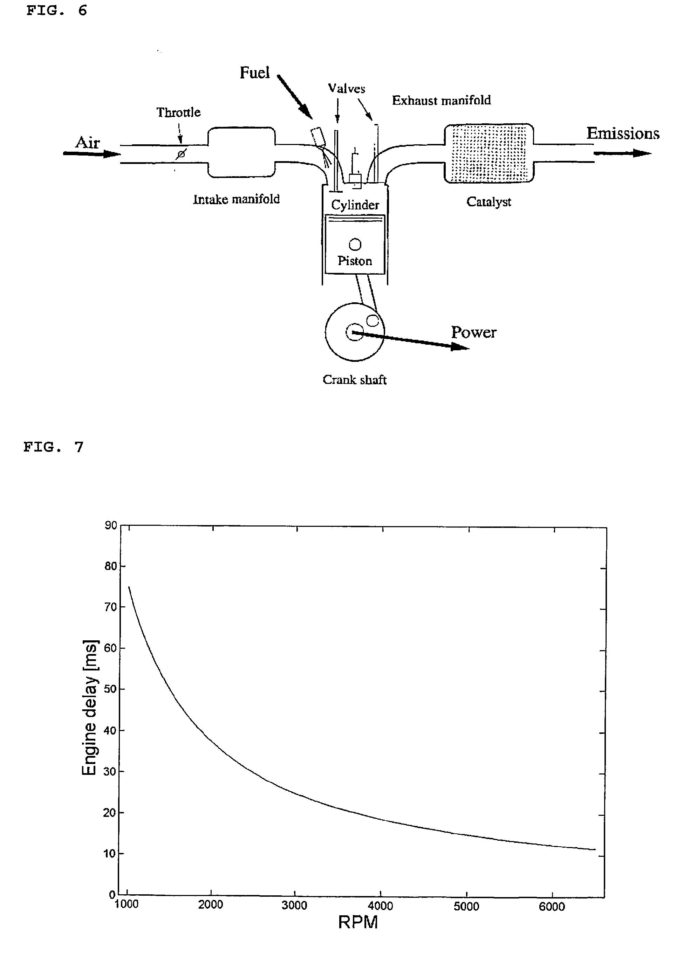

The combustion engine converts chemical energy into mechanical energy in a four-stroke cycle process. The engine used in this embodiment of the invention is a turbo-charged spark-ignition engine also known as a gasoline engine, described in FIG. 6. Here comes a brief introduction to the basic principle of how the four-stroke cycle combustion works. For additional information see:

J.B. Heywood. Internal Combustion Engine Fundamentals. McGraw-Hill International Editings, Singapore, 1988.

The driver controls the engine torque through the accelerator that is connected to the throttle. The throttle controls the flow of air into the intake manifold and thus how much energy that can be developed in the engine. Before the air enters the cylinder it is injected with fuel to produce a highly inflammable mixture. The air/fuel ratio in this mixture is carefully controlled to hold the so-called *stoichiometric* ratio. If this ratio is not reached the combustion will not be optimal and there will be an increase of emissions in the exhaust from the engine. This will lead to that the three-way catalyst will not work properly and it might even be damaged, depending on the mixture. The piston in the cylinder works in a four-stroke pattern where each stroke takes half an engine revolution. The strokes are called *Intake, Compression, Expansion* and *Exhaust.*

During intake the intake valve is open and the piston moves downward and the air/fuel mix is filled into the cylinder. Then the piston moves upwards in the compression phase and the mixture is compressed to a higher temperature (and pressure). Just before reaching the top position in the cycle the mixture is ignited by a spark that initiates the combustion. The piston then moves downward (expansion) and torque is generated and transferred to the crankshaft. When the bottom is reached, the exhaust valve opens and while the piston moves upwards the combusted gas mix in the combustion chamber is pushed out into the exhaust system. Then a new operating cycle starts with the intake stroke.

[Engine Model]

In the model, the engine is considered as a torque generator with the ability to directly produce the torque requested by the driver (through the accelerator/throttle). This is not the case in reality where the output torque is a function of many variables such as engine speed, boost pressure, temperature, etc, but this it is of no concern for the realisation of this invention. However, the fuel-blocking method of controlling the engine torque gives rise to two phenomena: a rise time to reach the desired torque and an engine speed dependent delay.

The low-pass filter step-response is due to remaining non-combusted gasoline on the wall of the cylinder that will ignite even though no new gasoline is injected. Thus,

$$\dot{T}_e = \frac{1}{t_e}\left(T_{demanded} - T_e\right) \tag{1}$$

where $T_{demanded}$ is the torque requested by the controller and $T_e$ is the engine output torque. The time constant $t_e$ of this step-response is not easy to specify but should be engine speed dependent to a certain extent. The conclusion of this is that even if the anti-slip system sends proper actions to the engine it is not certain that they can be produced in good time.

The delay is due to the fact that the engine control system first must wait for a cylinder to reach the fuel injection phase before the fuel can be blocked and then the effect of the fuel blocking will take place one engine revolution later. This delay is referred to as the *engine delay* and the equation for the average delay becomes

$$d_{engine} = \frac{5 \cdot 2 \cdot \pi}{4 \cdot \omega_e} = \frac{5 \cdot \pi}{2 \cdot \omega_e} \qquad (2)$$

where $\omega_e$ is the engine speed. The engine delay is also shown in Figure 7. The complete engine model with delay and rise time becomes:

$$\dot{T}_e(t) = \frac{1}{t_e}\left(T_{desired}(t - d_{engine}) - T_e(t)\right) \qquad (3)$$

**[Driveline]**

The driveline is the mechanical arrangement that transfers the engine torque to the driving wheels. It is a quite complex system that includes the clutch, a multi-shift gearbox and several shafts for power transfer. The car studied in this preferred embodiment of the invention had a frontal drive with means that the engine torque (ideally) was evenly distributed through a so-called *differential* between the two front wheels. The main properties of the driveline consist of the gear ratios, final drive, inertias and stiffness and damping factors for the shafts and the transmission.

[Driveline Model]

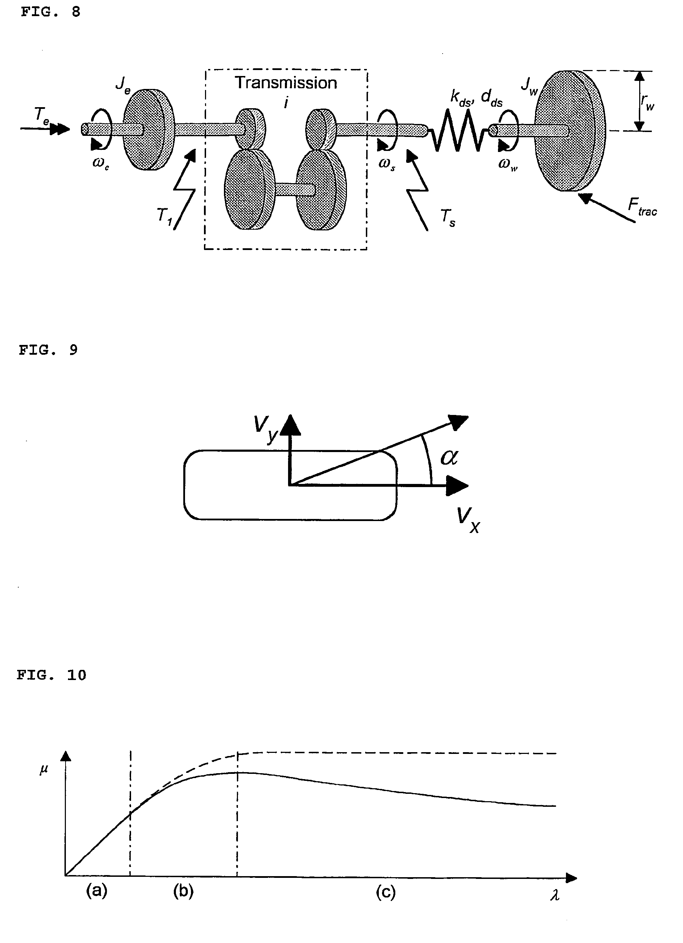

There exist a number of possible ways to simulate the behaviour of a vehicle driveline. A three state model was used by Fredriksson in
J. Fredriksson. Nonlinear Model-based Control of Automotive Powertrain. Ph.D. thesis, Chalmers University of Technology, Göteborg, Sweden, 2002.
and it is presented in FIG. 8 in a slightly modified form.
It can be shown that this third-order model captures all of the driveline major characteristics including first order oscillations. Still it is necessary to assume that all other parts of the driveline (the clutch, transmission, etc.) are completely stiff. The main difference between the model used by Fredriksson and the model used here is that the no-slip condition found in Fredrikssons model is replaced with a single-wheel traction model presented in the next section. From left to right in FIG. 8 the equations becomes

$$J_e \dot{\omega}_e = T_e - T_1 \qquad (4)$$

where $J_e$ is the inertia of the engine (flywheel, camshaft, pistons, etc) and $T_e$ is the engine torque. For the transmission the following two expressions hold:

$$\omega_e = i\omega_s \qquad (5)$$

$$T_1 i = T_s \qquad (6)$$

where $i$ denotes the chosen gear ratio (no gear shifting situations are considered in this model). The driveshaft torque $T_s$, represented by a torsion spring, can be expressed as

$$T_s = k_{ds}\left(\varphi_s - \varphi_w\right) + d_{ds}\left(\omega_s - \omega_w\right) \qquad (7)$$

where $k_{ds}$ and $d_{ds}$ are the properties of the spring and $(\varphi_s - \varphi_w)$ is the angular deformation of the driveshaft. Finally the equation for the wheel becomes,

$$J_w \dot{\omega}_w = T_s - r_w F_{trac} \qquad (8)$$

where $F_{trac}$ is the longitudinal traction force from the tire model. The origin and behaviour of $F_{trac}$ will be explained in the next section. After some manipulations the expressions become

$$J_e \dot{\omega}_e = T_e - \frac{1}{i}\left(k_{ds}\left(\varphi_s - \varphi_w\right) + d_{ds}\left(\omega_s - \omega_w\right)\right) \qquad (9)$$

$$\omega_e = i\omega_s \qquad (10)$$

$$J_w \dot{\omega}_w = k_{ds}\left(\varphi_s - \varphi_w\right) + d_{ds}\left(\omega_s - \omega_w\right) - r_w F_{trac} \qquad (11)$$

If the torsion of the driveshaft is introduced as a state variable as $\varphi_\Delta = \varphi_s - \varphi_w$ the equation system can be rewritten as

$$\begin{cases} \dot{\omega}_e = -\dfrac{d_{ds}}{J_e i^2}\omega_e + \dfrac{d_{ds}}{J_e i}\omega_w - \dfrac{k_{ds}}{J_e i}\varphi_\Delta + \dfrac{1}{J_e}T_e \\[2ex] \dot{\omega}_w = \dfrac{d_{ds}}{J_w i}\omega_e - \dfrac{d_{ds}}{J_w}\omega_w + \dfrac{k_{ds}}{J_w}\varphi_\Delta - \dfrac{r_w}{J_w}F_{trac} \\[2ex] \dot{\varphi}_\Delta = \dfrac{\omega_e}{i} - \omega_w \end{cases} \qquad (12)$$

where $T_e$ and $F_{trac}$ are seen as inputs (this is not entirely true for $F_{trac}$ as will be shown in the next section). Since the torque of the flexible shaft is easier to measure it would perhaps be better to use $T_s$ as state instead of $\varphi_\Delta$ but for this embodiment this is not of importance.

**[Tire-Ground Contact]**

A common simplification in mechanics is to let the peripheral speed of a rolling wheel to be equal to the vehicles velocity. In reality, this is true only if there is no exchange of forces present in the longitudinal direction between the wheel and the ground. If there are forces present the wheel will undergo an elastic deformation (cf. spring) and start to "creep" relative to the ground and so the peripheral velocity of the wheel will differ from the vehicle speed. For example, to accelerate a vehicle the driving wheel speed must be higher than the vehicles speed. This difference is called slip and is a fundamental property in vehicle dynamics. The SAE J670 definition of the slip $\lambda$ is

$$\lambda = \frac{r\omega_w - v_x}{v_x} \qquad (13)$$

where $r$ is the wheel radii, $\omega_w$ is the speed of the driving wheel and $v_x$ is the vehicle speed (usually approximated by the speed of the non-driven wheels). When driving along a curved path there must be forces present in the lateral direction as well to keep the vehicle on track. In analogy with the case of longitudinal forces the wheel must have a lateral velocity relative to the ground to transfer forces in that direction. This brings us to the definition of the slip-angle as illustrated in FIG. 9, where $\alpha$ is the slip-angle and $v_x$ and $v_y$ is the longitudinal an lateral velocities of the vehicle, respectively. The Mathematical expression is,

$$\alpha = \arctan\left(\frac{v_y}{|v_x|}\right) \tag{14}$$

As stated above both the slip $\lambda$ and the slip angle $\alpha$ are functions of the transferred force between the wheel and the ground. For mathematical reasons the relationship is often seen the other way around and a so-called *slip curve* can be drawn from measurements. As the graph in FIG. 10 shows, the friction coefficient $\mu$ is not a constant as in the case of normal friction but it is a non-linear function of the slip $\lambda$ (this is not entirely true and will be discussed later on). Here, $\mu$ is referred to as *the traction coefficient* to avoid confusion. The purpose of a tire model is to describe the non-linear relationship between the slip and the transferred force between the wheel and the ground. Typically the relationship can be described as

$$F_x = F_z \mu\left(\lambda, \mu_{\max}, \alpha, F_z, v_x\right) \tag{15}$$

where $F_{trac}$ is the longitudinal force, $F_z$ is the present vertical load on the wheel, $\alpha$ is the slip angle (only present when cornering), $v_x$ is the vehicle speed and $\mu_{max}$ is the maximal friction coefficient for the tire/ground combination. The word tire-model is in a way misleading since the shape of the slip curve is dependent of the ground texture and other environmental characteristics, such as temperature (that influence the wheel stiffness). However, an attempt to briefly explain why the slip curve has the form shown in FIG. 10 follows. For additional information, see

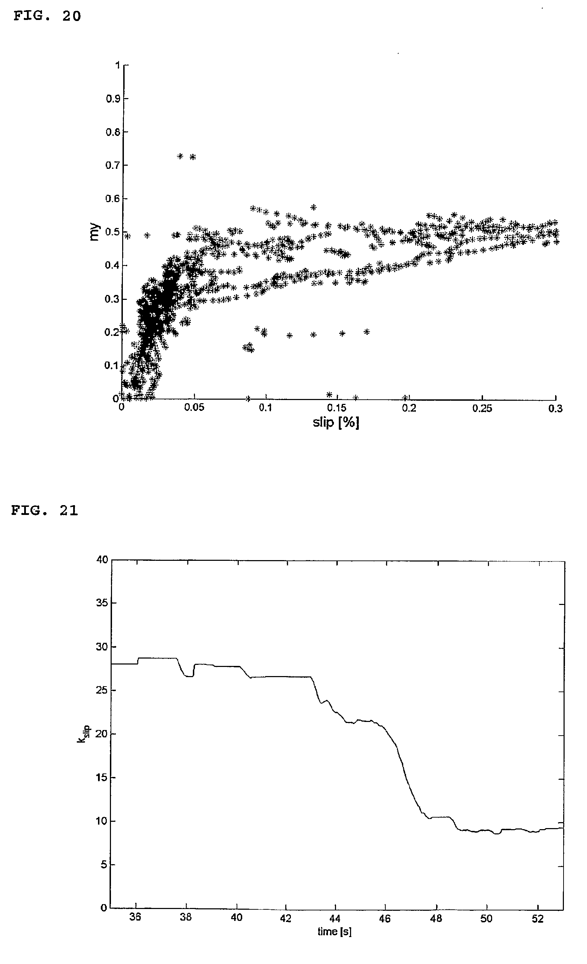

J.Y. Wong. Theory of Ground Vehicles, 2nd edition. John Wiley & sons, New York, 1993;
and
J. C. Dixon. Tires, Suspension and Handling. 2nd edition, Society of Automotive Engineers, Warrendale, USA, 1996.
At low slip levels (FIG. 10, case a) there is a linear relationship between slip and traction. This is mainly due to the fact that the tire is (approximately) not sliding against the ground but behaves somewhat like a linear spring as stated above. However, the stiffness of this spring is heavily dependent of the ground conditions, that is, the slope of the slip curve varies depending on whether the vehicle is driving on gravel or asphalt. A linear model for low slip values can be established as

$$\mu = k_{slip}\lambda \tag{16}$$

where $k_{slip}$ is a function of the tire characteristics (inflation pressure, tread, etc) and of environmental factors (temperature, road texture, etc).
As the slip $\lambda$ increases (Figure 4.5, case b) the relationship becomes more non-linear. This is explained by the fact that the maximum traction (that is $\mu_{max}$) is reached in tail part of the contact patch between tire and ground and a sliding region will develop.
At high slip levels (Figure 4.5, case c) the slope of the slip curve is negative. This is because the maximum traction (that is $\mu_{max}$) is reached in the whole contact patch. When the whole tire is sliding heat will develop in all its length at a rate that is assumable proportional to the speed difference between the wheel perimeter and the ground. The energy loss due to this heat development will bend the slip curve downwards and it assumes the characteristic humped, or thermal shape. However, the "hump" is more or less present on different surfaces. On low-$\mu$ surfaces like gravel or snow it is hardly detectable (isothermal).
A consequence of this is that the slip curve is not only dependent of the slip $\lambda$ but also of the absolute speed difference $\Delta v$. The conclusion to draw from this discussion is that the slip curve will have a different behaviour at different speeds since there is a sliding region developed in the contact path.
It is also appropriate to note that most of the slip curves presented in literature are intended for braking applications where the slip is defined slightly different compared with the definition used here. This might explain the dominant "hump" in those slip curves. While accelerating (the case in this study) this "hump" is as stated above not detected as will be shown in the description of FIG. 20.

[Tire-Ground Contact Model]

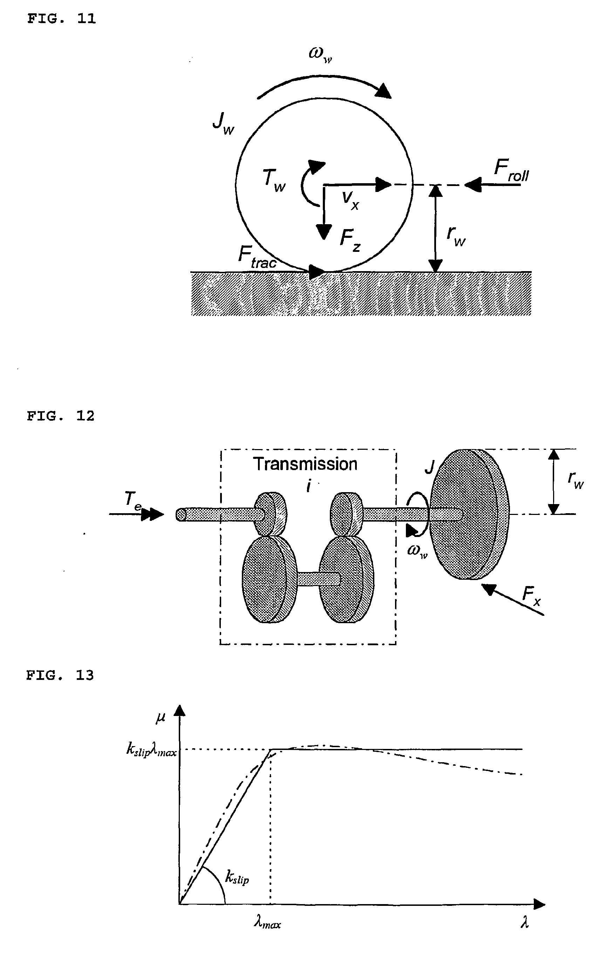

The basic behaviour of a wheel driven vehicle travelling on a straight line is quite well captured by a *single wheel* or *quarter car model* (FIG. 11) as described in
T. Glad, L. Ljung. Reglerteori. Studentlitteratur, Lund, Sweden, 1997.
The equations of the model are (cf. equation 8):

$$J_w \dot{\omega}_w = T_w - r_w F_{trac} - r_w F_{roll} \tag{16}$$

$$m\dot{v}_x = F_{trac} - F_{roll} - \tfrac{1}{2} C_d A \rho v_x^2 \tag{17}$$

where $J_w$ is the wheel inertia, $\omega_w$ is the wheel speed, $T_w$ is the applied torque, $r_w$ is the wheel radii, $m$ is the vehicle mass, $v_x$ is the vehicle speed, $F_{trac}$ is the force in the contact path, $F_{roll}$ is the rolling resistance, $C_d$ is the air resistance (e.g. drag) coefficient, $A$ is the vehicle frontal area and $\rho$ is the air density.
The longitudinal traction force $F_{trac}$ could as stated earlier be seen as a non-linear function of the slip with a number of parameters, such as temperature and ground surface conditions. One approach to the use of the slip curve in a simulation sense is to say that the shape of the curve is depending of the environment (temperature, ground surface conditions, etc) and then use the slip $\lambda$ to calculate the longitudinal force.
The non-linear relationship between the longitudinal force and the slip is then preferably calculated using a very simple static tire model as

$$\mu(\lambda) = \begin{cases} k_{slip} \lambda & if \quad \lambda \le \lambda_{max} \\ k_{slip} \lambda_{max} & if \quad \lambda \ge \lambda_{max} \end{cases} \tag{18}$$

$$F_{trac} = \mu(\lambda) F_z \tag{19}$$

The parameters of the equation could then be changed to simulate driving on different surfaces (generally a surface with low $k_{slip}$ has a low $\lambda_{max}$).

**[Complete Model]**

The resulting vehicle model consists, even though kept simple, of a five-state system of differential algebraic equations. The model was implemented in SIMULINK® and served as a primary environment for the development of the control system of the preferred embodiment of the invention. $T_{desired}$ is the input to the system.

$$\dot{x} = f(x,u,\theta) \Leftrightarrow \begin{cases} \dot{T}_e = -\dfrac{1}{t_e}T_e + \dfrac{1}{t_e}T_{desired}\left(t - \dfrac{5\pi}{2\omega_e}\right) \\[2ex] \dot{\omega}_e = -\dfrac{d_{ds}}{J_e i^2}\omega_e + \dfrac{d_{ds}}{J_e i}\omega_w - \dfrac{k_{ds}}{J_e i}\varphi_\Delta + \dfrac{1}{J_e}T_e \\[2ex] \dot{\omega}_w = \dfrac{d_{ds}}{J_w i}\omega_e - \dfrac{d_{ds}}{J_w}\omega_w + \dfrac{k_{ds}}{J_w}\varphi_\Delta - \dfrac{r_w}{J_w}F_{trac} \\[2ex] \dot{\varphi}_\Delta = \dfrac{\omega_e}{i} - \omega_w \\[2ex] \dot{v}_x = \dfrac{1}{m}F_{trac} - \dfrac{1}{m}F_{road} - \dfrac{C_d}{m}v_x^2 \end{cases} \qquad (20)$$

$$\lambda = \frac{r\omega_w - v_x}{v_x} \qquad (21)$$

$$\mu(\lambda) = \begin{cases} k_{slip}\lambda & if \quad \lambda \le \lambda_{max} \\[1ex] k_{slip}\lambda_{max} & if \quad \lambda \ge \lambda_{max} \end{cases} \qquad (22)$$

$$F_{trac} = \mu(\lambda)F_z \qquad (23)$$

**[DESIGN OF CONTROLLERS]**

The quality of the input signals to the controller is often a limiter when it comes to how refined the controller is possible to make. For instance, many controllers make use of the derivate of the controlled entity to be able to faster compensate for changes. Perhaps even faster compensation could be reached if the second derivate also was used but this is seldom possible due to the fact that differentiated signals have a tendency to become very noisy.

**[Model simplification]**

To derive a manageable model-based controller it is appropriate to simplify the equations for the considered system (here, equations 20-23). This is a hard trade off between keeping information and still getting a manageable system. Two different embodiments for the controller are here proposed. They both use the same simplifications (except for the *slow variation of vehicle speed* which is only used by the normalised controller below):

- The driveshaft is stiff
- Engine dynamics can be sufficiently captured by a LP-filter and a delay
- Linear tire model up to $\mu_{max}$
- Slow variation of vehicle speed

[Stiff drive shaft]

Test performed on the V40 shows that the driveshaft is quite stiff and the wheel oscillations can be ignored. So for the controller design purpose it is not necessary to include the influence from the "weak" driveshaft.

This makes it possible to transform the inertia from the engine to the wheel over the transmission leading to a new inertia $J$ that describes both the two wheels and the engine inertia as

$$J = 2J_w + i^2 J_e . \tag{24}$$

With a stiff drive shaft the differential equation for the driveline (equation 12) is derived as

$$\dot{\omega}_w = \frac{iT_e - r_w F_{trac}}{J} . \tag{25}$$

The stiff driveshaft model is schematically viewed in FIG. 12.

[Engine dynamics]

The engine dynamics due to wall-wetting and other thermodynamic phenomenon are assumed to be of LP-character but are very difficult to estimate. Wall wetting arises since some gasoline always sticks on the inlet walls to the blocked cylinder. This dynamic behaviour is actually heavily depending on engine speed, wall temperature and which control action being applied. Therefore an average estimate of the time constant $t_e$ is preferably used. The equation is the same as used in the simulation environment.

[Slow variations of vehicle velocity]

The slip function (defined in equation 13) is non-linear, therefore a direct application of a linear controller is not possible without some kind of simplification. In the later on described absolute controller this simplification is not necessary. The idea is to use the fact that changes in vehicle speed is much slower than the changes in wheel speed for the driven wheels.

The validity of this statement is also relevant for this embodiment, although the engine inertia $J_e$ makes the total inertia larger than in a braking manoeuvre.

[Linear tire model]

In comparison to theory, the presumption of a linear tire model (FIG. 12) is a major simplification. On the other hand, measurements performed by the inventors imply that the simplification may be quite relevant (see FIG. 20). Anyway, in reality the slip curve is not fixed but changes all the time (rolling gravel on asphalt, tram tracks, etc.) so even a non-linear tire model would not give a very good picture of the reality. A more sophisticated strategy for estimating the slip curve is disclosed in an alternative embodiment which follows later on: However, even if the linear slip curve isn't entirely correct, it provides useful qualitative information about the ground conditions.

In a possible embodiment of the invention two controllers are used, one controller on the top of the tire model where

$$\frac{\partial \mu}{\partial \lambda} = 0 \tag{26}$$

and another controller on the slope where

$$\frac{\partial \mu}{\partial \lambda} = k_{slip} \cdot \tag{27}$$

and

$$F_{trac} = k_{slip} F_z \lambda \tag{28}$$

FIG. 13 shows the relationship between the real slip curve and the approximation used in the controller.

**[Normalised slip transfer function]**

In the transfer function that is to be derived, the common way to define the slip $\lambda$ is used, that is the *normalised* slip definition (equation 13). The assumption that the change in vehicle speed is much slower than the change in the slip gives that the vehicle acceleration can be seen as zero. The derivative of the slip then becomes

$$\dot{\lambda} = \frac{\dot{\omega}_w r_w}{v_x} \cdot \tag{29}$$

Combining equations 3, 25, 28, and 29 and transforming them to the Laplace plane, leads to a transfer function from demanded engine torque to slip as

$$G_{norm}(s) = \frac{\lambda}{T_{demanded}} = \frac{ie^{-s\frac{5\pi}{2\omega_e}}}{\left(J\frac{v_x}{r_w}s + r_w k_{slip} F_z\right)(1 + t_e s)} \cdot \tag{30}$$

Unfortunately this equation has four time varying parameters, the vehicle velocity $v_x$, slip slope $k_{slip}$, engine speed $\omega_e$ and gear ratio $i$. For simplicity, the engine speed can be seen as a function of the vehicle speed and gear. This is of course not entirely true, especially in a high slip situation but this assumption gives some extra margins in the controller when it overestimates the engine delay. For the other three parameters we need to scale the system. This gives us a gain scheduling controller in the three dimensions vehicle speed, slip slope and gear. The slip slope is preferably estimated with a Kalman filter, as will be described later.

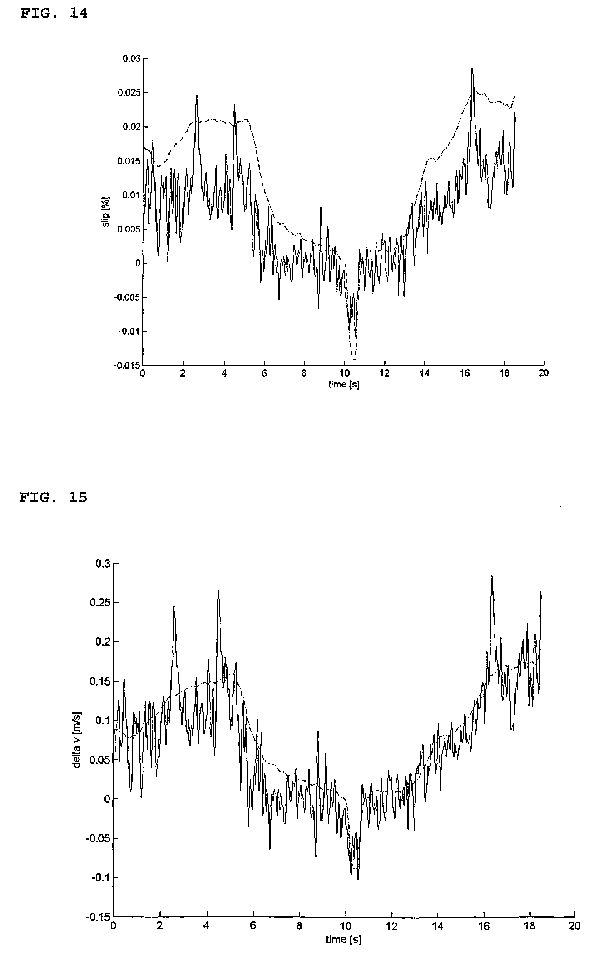

The transfer function $G_{norm}(s)$ was compared with the behaviour of the real vehicle and the result is diagrammed in FIG. 14. The transfer function was fed with the measured engine torque, vehicle velocity and the estimate of the prevailing $k_{slip}$.

**[Absolute slip transfer function]**

Another way to avoid non-linearity in the controller is to use the *absolute* slip definition, that is the speed difference $\Delta v$ between the driven and the non-driven wheels,

$$\Delta v = \omega_w r_w - v_{vehicle} \cdot \tag{31}$$

The relations between the traction $\mu$ and the speed difference $\Delta v$ is

$$\mu = k_{\Delta v} \Delta v . \qquad (32)$$

where $k_{\Delta v}$ can be derived from the estimated slip slope $k_{slip}$ as

$$k_{\Delta v} = \frac{k_{slip}}{v_x} . \qquad (33)$$

Equation 31 is differentiated in analogy with the procedure for the normalised slip transfer function although it is not necessary to assume that the vehicle speed is constant. Thus,

$$\Delta \dot{v} = \dot{\omega}_w r_w - \dot{v}_{vehicle} . \qquad (34)$$

Together with simplified functions for the driven wheel speed (25) and the vehicle velocity (cf. equation 20),

$$\dot{\omega}_w = \frac{T_e i - F_{trac} r_w}{J} \qquad (35)$$

$$\dot{v}_x = \frac{F_{trac}}{m} , \qquad (36)$$

a transfer function for the absolute slip can be derived by combining equations 3, 23, 32, 33, 34, 35 and 36 and transforming them to the Laplace plane. The transfer function becomes

$$G_{abs}(s) = \frac{\Delta v}{T_{demanded}} = \frac{\frac{r_w i}{J} e^{-s\frac{5\pi}{2\omega_e}}}{t_e s^2 + \left(1 + t_e k_{\Delta v} \frac{F_z g}{2}\left(\frac{r_w^2}{J} + \frac{1}{m}\right)\right) s + k_{\Delta v} \frac{F_z g}{2}\left(\frac{r_w^2}{J} + \frac{1}{m}\right)} \qquad (37)$$

with the time varying parameters $i$ and $k_{\Delta v}$. The transfer function $G_{abs}(s)$ was compared with the behaviour of the real vehicle and the result is diagrammed in FIG. 15. The transfer function was fed with the measured engine torque and the prevailing $k_{slip}$. A direct comparison between the two transfer functions and their ability to reproduce reality (FIG. 14 and 15) implies that the transfer functions for the absolute slip seems more accurate. This is probably due to the fact that the normalised transfer function looses information when the vehicle speed derivate is omitted.

**[Controller design - IMC]**

The method preferably chosen for designing the controller in hereinafter referred to as Internal Model Control (IMC). When choosing a design method it is important to consider the problem specific criteria that have to be met. For this application three main criteria could be established.
First, the controller should preferably be quick but still robust and preferably be able to follow and hold a reference value. Generally this can be achieved by using a controller that includes parts proportional to the error (P), the integral of the error (1) and the derivative of the error (D) or equivalent.

The second criterion arises since the system (the vehicle) will change its behaviour depending on the working point (that is gear ratio, ground conditions, etc.). This implies that the controller should preferably have to be gain scheduled to obtain a good performance. In order for this to work properly, the derived controller should preferably be "smooth" (or even linear) in its components with regard to its scaling parameters. This is to avoid sudden changes in the controller parameters when changing operating point with resulting "jumpy" behaviour of the control signal.

In addition to this a third criterion was that the chosen method should preferably be easy to use and result in an easily tuned controller.

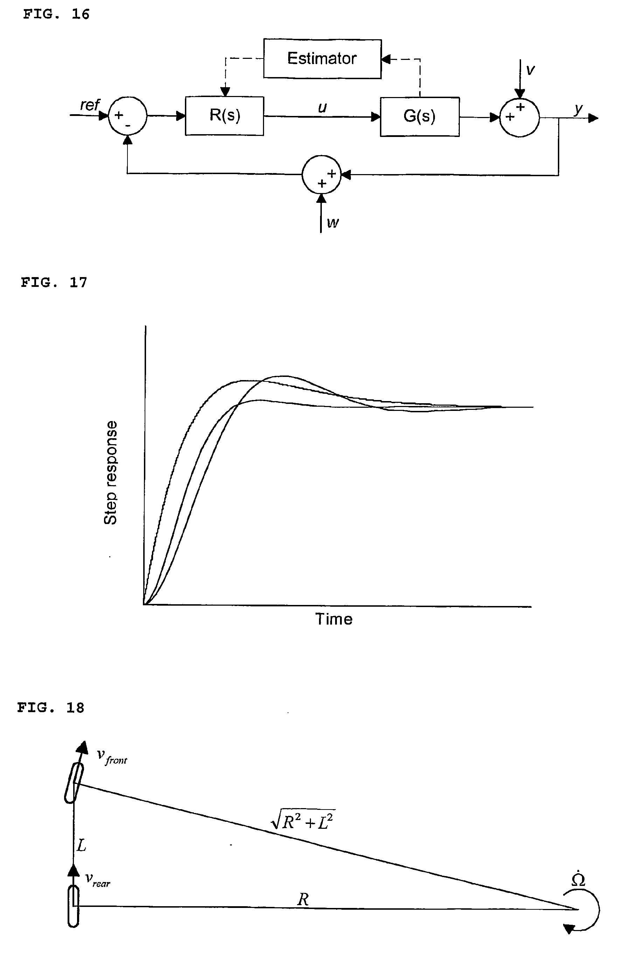

The general concept in IMC is to design a controller that gives the closed loop system (FIG. 16) a desired transfer function. If the transfer function, describing the controlled system G(s) is completely correct this method automatically results in a stable controller with regard to the sensitivity function and the complementary sensitivity function

(Sensitivity function $S(s) = \dfrac{y}{v}$, Complementary sensitivity function $Q(s) = \dfrac{y}{w}$). The controller has, in this embodiment, preferably only one design parameter $\beta$ that sets the bandwidth for the system.

To illustrate the influence of $\beta$ step responses for a closed loop system is diagramted in FIG 17. The graphs show that there exists a $\beta$ that results in the most favourable response. For more information about IMC, see T. Glad, L. Ljung. Reglerteori. Studentlitteratur, Lund, Sweden, 1997.

The following controllers, developed with IMC, can be seen as PID-controllers convolved with first order low pass filters. Except for the design parameter $\beta$, all parameters in the controllers have physical meaning describing the slip dynamics. It is also clearly visible how the different model parameters and $\alpha$ affects the P-, I- and D-parts of the controller. For the normalised slip the controller becomes

$$R_{norm}(s) = \frac{\left[\dfrac{Jv_x}{2i\beta r_w}\right]s + \left[\dfrac{Jv_x + r_w^2 kF_z t_e}{2i\beta r_w}\right] + \left[\dfrac{r_w kF_z}{2i\beta}\right]\dfrac{1}{s}}{\left(\dfrac{\beta}{2}s + 1\right)} \qquad (38)$$

which needs to be scheduled for $v$, $k_{slip}$ and $i$. For the absolute slip the controller becomes

$$R_{abs}(s) = \frac{\left[\dfrac{Jt_e}{2ir_w\beta}\right]s + \left[\dfrac{J}{2ir_w\beta}\left(1 + t_e k_{\Delta v}\dfrac{F_z g}{2}\left(\dfrac{r_w^2}{J} + \dfrac{1}{m}\right)\right)\right] + \left[\dfrac{Jk_{\Delta v}F_z g}{4ir_w\beta}\left(\dfrac{r_w^2}{J} + \dfrac{1}{m}\right)\right]\dfrac{1}{s}}{\left(\dfrac{\beta}{2}s + 1\right)} \qquad (39)$$

which needs to be scheduled for $k_{\Delta v}$, and $i$.

The effects of the engine delay (and communication related delays) are not treated in any special way, but the controller is slowed down to keep stability. There are other ways to handle time delays, the most common is to use a prediction model as in the Otto-Smith controller described in the reference cited above.

**[Controller Logic]**

The main logical problem for an anti-slip system is how and when the controller should be turned on and off. The first subquestion to this problem is what the controller should calculate, the necessary torque the engine should give to sustain a certain slip or the torque reduction necessary in the current situation. Another related question is how the integrator should act when the controller is outside its working area.

**[Ackerman Steering]**

When driving along a curved path, the front wheels of the vehicle will travel a longer distance than the rear wheels. If the car is front wheel driven this will increase the slip. To compensate for this "false" slip component it is advantageous to recalculate the slip with regard to the turn radius. If the slip angles are neglected (in reality they are preferably kept small) and no driving torque is applied ($v_{front} = \omega_w r_w$) a bicycle model will turn like in FIG. 18 and the velocities in the slip equation could be normalised with respect to the travelled distance for each tire.

This compensation yields approximately even for small slip and slip angles. The compensated slip equation then becomes

$$\lambda = \frac{\dfrac{r_w \omega_w}{\dot{\Omega}\sqrt{R^2 + L^2}} - \dfrac{v_x}{\dot{\Omega}R}}{\dfrac{v_x}{\dot{\Omega}R}} = \frac{r_w \omega_w}{v_x \sqrt{1 + \left(\frac{L}{R}\right)^2}} - 1 \tag{40}$$

where $L$ is the shaft distance and $R$ is the turning radius.

This compensation is dependent of the unknown turning radius $R$ so it has to be estimated. One possible way of doing this in a vehicle not equipped with accelerometers and yaw rate sensors is to derive R from the difference in rear wheel velocities as

$$\left(R + \frac{B}{2}\right)v_{x,left} = \left(R - \frac{B}{2}\right)v_{x,right} \Rightarrow R = \frac{Br_w\left(\omega_{right} + \omega_{right}\right)}{2r_w\left(\omega_{right} - \omega_{right}\right)} = \frac{Bv_x}{\delta} \tag{41}$$

where $B$ is the track width of the vehicle. The compensated slip equation can be established like

$$\lambda = \frac{r_w \omega_w}{v_x\sqrt{1 + \left(\dfrac{L\delta}{Bv_x}\right)^2}} - 1 \tag{42}$$

If absolute slip is used the compensation can be derived in analogy with the discussion above and the compensated $\Delta v$ becomes:

$$\Delta v = \frac{r_w \omega_w}{\sqrt{1 + \left(\dfrac{L\delta}{Bv_x}\right)^2}} - v_x \tag{43}$$

The line of thought used to derive this slip compensation is quit simplified compared to reality where both slip angles and speed differences between the front wheels are present. The cornering behaviour of a real car is also dependent of where its centre of mass is situated as also described in

J.Y. Wong. Theory of Ground Vehicles, 2nd edition. John Wiley & sons, New York, 1993.

**[The k$_{slip}$-estimator]**

The only unknown parameter in the controller is the slip slope $k_{slip}$ that has to be estimated. This is not a simple task to perform in real time applications but there are some methods developed for this task, an example is RFI (Road Friction Indicator). The RFI is preferably based on a time varying Kalman filter as described in more detail later on. In the present embodiment, a simplified scalar version of the Kalman filter is used.

The filter is advantageously based on the following equations where *e(t)* and *v(t)* are measurement and process noise:

$$k_{slip}(t+1)^{-1} = k_{slip}(t)^{-1} + v(t) \qquad (44)$$

$$\lambda = k_{slip}(t)^{-1} \mu(t) + e(t) \qquad (45)$$

Q(t) and R(t) is introduced as the variance of v(t) and e(t):

$$Q = E\big[e(t)e(t)\big] \qquad (46)$$

$$R = E\big[v(t)v(t)\big] \qquad (47)$$

With v(t) and e(t) considered as white gaussian noises the Kalman filter gives the optimal state estimate $\hat{k}(t)$. The filter algorithm advantageously looks as follows:

$$S(t) = P(t-1) + Q \qquad (48)$$

$$K(t) = S(t)\mu(t)\big(\mu(t)S(t)\mu(t) + R\big)^{-1} \qquad (49)$$

$$\hat{k}_{slip}(t)^{-1} = \hat{k}_{slip}(t-1)^{-1} + K(t)\big(\lambda(t) - \mu(t)\hat{k}_{slip}(t)^{-1}\big) \qquad (50)$$

$$P(t) = S(t) - K(t)\mu(t)S(t) \qquad (51)$$

The design parameters for the filter is the ratio of the noise covariances *Q* and *R* (the initiations values of *P(0)* and $k_{slip}(0)$ can be stored when the car is not running). The covariance ratio is set so that $k_{slip}$ is quite rapidly estimated but still not too noisy. For sudden changes in $k_{slip}$ (e.g. ice patch) the estimator will not be able to capture the rapid change and thus the controller will not be properly initialised (the $k_{slip}$ used in the controller and the slip reference calculator will be wrong).

As for the controller, the $k_{slip}$-estimator should preferably be surrounded by logic to switch the filter on and off.

**[REFERENCE VALUE CALCULATION]**

In classic theory the slope $k_{slip}$ of the slip curve is said to depend only of the tire properties (essentially inflation pressure and tire type). This has been taken for a fact for many but the inventors have found out that this is not at all the case. On the contrary, the slope is heavily dependent of the ground conditions. When driving on gravel or ice the

estimated $k_{slip}$ is found to be substantially lower than what estimated while driving on asphalt. This is clearly contradictory with the commonly accepted theories on the subject. With this new theory, an on-line estimate of a ground condition dependent $k_{slip}$ could, together with empirical knowledge of the corresponding $\mu_{max}$, be used to estimate an appropriate slip reference for the current driving case. This approach is preferably used in this embodiment because of its simplicity even though an alternative embodiment is discussed later on.

[Implemented Strategy]

The slip reference is advantageously calculated according to two assumptions:

- The incline of the slip curve can be used to set a reference value (empirical knowledge of the corresponding $\mu_{max}$)
- Lateral stability is prioritised while cornering and at high speeds

The calculations are preferably performed as following: first a nominal reference value is chosen depending on prevailing ground conditions (e.g. $k_{slip}$) as

$$\lambda_k(k) = \begin{cases} \lambda_{k,high} & if\ k_{slip} = k_{slip,high} \\ \lambda_{k,med} & if\ k_{slip} = k_{slip,med} \\ \lambda_{k,low} & if\ k_{slip} = k_{slip,low} \end{cases} \tag{52}$$

with some kind of linear interpolation between the entries. The required lateral force to keep the vehicle on the path is calculated and the reference value could be compensated as

$$\lambda_{ref} = \lambda_k(k_{slip})\left(1 - k_1 m \frac{v_x^2}{R}\right). \tag{53}$$

According to equation (41) $R$ can be derived from the wheel speed signals and the compensated reference value becomes

$$\lambda_{ref} = \lambda_k(k_{slip}) \max\left(\left(1 - k_1 m \frac{B v_x \delta}{L}\right), k_2\right) \tag{54}$$

where $k_1$ and $k_2$ are the design parameters. Even if the safety ellipse is a good model for deriving the optimal reference value it is dependent of many parameters that are hard to estimate. The equation suggested here is more intuitive, the reference value will decrease with larger centripetal acceleration but it will never go down to zero (and thus kill the engine). However, there is no possibility of detecting what the driver intends to do in the sense that the steer angle is not measured and thus it is impossible to detect a turn until a certain speed difference is reached on the rear wheels. This implies that if the driver intends to turn he has to go easy on the accelerator to not provoke large slip angles on the front wheels. If there are large slip angles on the front wheels the available lateral force will not be sufficient to turn the car and no reduction of the reference value is performed with the result that an uncontrolled slide is provoked.
Finally, if desired, the speed influence could be considered and the reference value compensated according to

$$\lambda_{ref}(k_{slip}, v_x, \delta) = \lambda_k(k_{slip}) \max\left(\left(1 - k_1 m \frac{B v_x \delta}{L}\right), k_2\right) f(v_x, k_3) \tag{55}$$

where $k_3$ is used to control the speed influence. For low speeds anti-slip system should preferably work as a traction system, that is, the slip reference should preferably be set high while side stability is prioritised at higher speeds. Altogether this formula becomes very easy to understand and the influence of the different compensations can easily be tuned with $k_1$, $k_2$ and $k_3$ to achieve the desired behaviour of the vehicle without any knowledge of the theoretical slip characteristics. There is also the possibility to let $k_1$, $k_2$ and $k_3$ depend on $k_{slip}$ if there are demands for, let's say, even better lateral stability when driving on ice.

The calculated normalised slip reference could then easily be transformed into a absolute slip reference by multiplication with the vehicle speed.

**[Adaptive slip reference calculation]**

The embodiment suggested above does work sufficient for one set of tires or tires with similar characteristics, but the reference value may become incorrect if the tire type is radically changed (e.g. switch between summer and winter tires).

Another, simpler, approach to the problem with different tires could be to derive some standard settings for summer and winter tires and then let the driver decide his preference by pressing a button.

**[IMPLEMENTATION AND PERFORMANCE]**

This section will deal with the aspects of implementation of the control system in the Volvo V40 T4. This vehicle is originally equipped with an anti-slip system (NSC) which is based on look-up tables.

The developed control system could be directly implemented in any frontal driven vehicle with fuel blocking possibility, although it has to be adapted in the sense that the car specific parameters such as mass, wheelbase, inertias, etc., have to be changed. These parameters are usually found in the car configuration files sent over the CAN bus.

**[General Implementation Aspects]**

[Delays and Sample Time]

The data processing and data transfer will add an extra delay time to the control loop. In total the delay will consist of two parts, a constant part due to the vehicles internal signal routing configuration and sensors and a varying part that will depend on the engine speed ($d_{engine}$ as described hereinafter within the scope of the engine model). Thus,

$$d_{tot} = d_{ecu} + d_{engine}(\omega_e) \qquad (56)$$

The length of the constant part of this delay is difficult to estimate when it is dependent of how the different subsystems work. It could be estimated by triggering the ABS-system and then measure the time elapsed before the EECU delivers an output to the engine. However, when developing the system the delay will be significantly larger compared with the delay of a product implementation due to the use of xPC Target.

In addition to the extra delay, xPC Target cannot work faster than 50 Hz. This is not due to xPC Target itself but to the fact that the NSC cannot transfer data faster than this rate. The existing anti-slip controller (NSC) works at 200Hz. This implies that a direct comparison between the two systems is not completely fair.

[Parameter Identification]

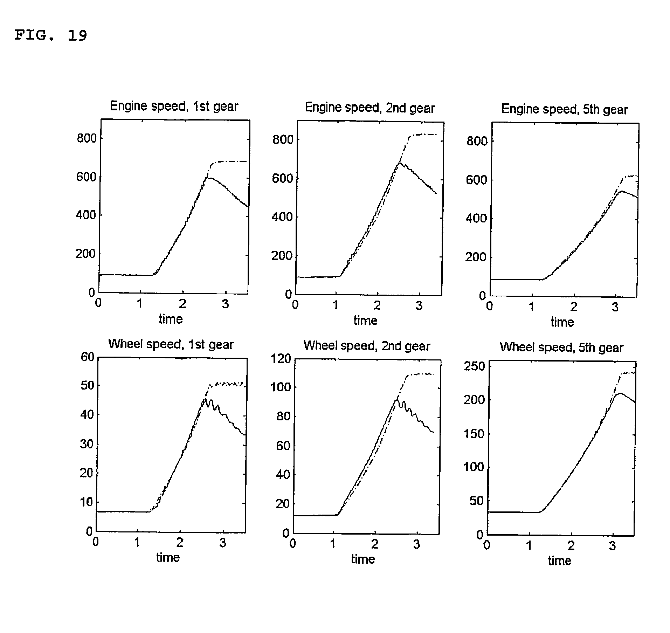

The model was validated against real-world data in a simple experiment. Since the measurement equipment was not able to present negative torques from the engine, i.e. all cases of engine braking, only acceleration cases could be validated with any certainty. Zeros replaced negative torques. Since influence form ground surface conditions were undesired the front wheels of the V40 was elevated in mid-air during testing. Full throttle accelerations were performed and the results presented in FIG. 19 as solid lines. The model was then fed with the measured torque output from the real engine and the model output was diagrammed against the measured outputs. The model parameters were adjusted from their (estimated) physical values to better reproduce the behaviour of the vehicle.

The most important model parameters to estimate were $J_e$ and $J_w$ as they are crucial for the controller performance. As clearly visible in FIG. 19 the model diverted severely from the real vehicle when the throttle was closed (negative engine torque).

**[The Measured Slip Curve]**

When confronted with reality one discovers that the tire model gives a idealised version of the ground contact characteristics. The measured slip may contain a lot of high frequency components due to the driveline dynamics, oscillations of the tire body and variations in the ground surface (stones, bumps, holes, etc). The longitudinal traction force is not directly measurable but has to be derived from either the vehicle acceleration or the engine torque. Both methods have their drawbacks. The acceleration is preferably measured as the derivative of the rear wheel speed and thus quite noisy. Furthermore, the method according to the present embodiment does not capture influence from slopes, air resistance, etc. The engine torque from the EECU is in the preferred embodiment taken from a steady state map and cannot capture any transient behaviour of the engine. In addition to this the engine torque is only valid for slip curve estimation at low slip levels if it is not correctly compensated for the wheel inertia and other energy losses. In FIG. 20 the vehicle acceleration was used as input. Both the slip and the acceleration had to be LP-filtered to be able to draw the slip curve.

However, the resulting slip curve shows that the assumption of a linear tire model is quite accurate up till $\mu_{max}$ and that no significant "hump" could be detected. Thus the strategy with two controllers, one in the linear region and one in the unstable, as advantageously suggested by the present embodiment seem promising.

**[$k_{slip}$-estimator]**

The filter is preferably tuned to have a fairly rapid transient behaviour without giving a too noisy estimate of the slip slope. As shown in FIG. 21 it takes about four seconds to detect a change in ground condition (here asphalt to gravel). However, additional work has to be done on the estimator if it is to be more accurate. The flats in the curve indicate where the filter logic has decided to turn the estimator off

**[PERFORMANCE OF CONTROLLER]**

Of the two described embodiments for the controllers, the controller based on absolute slip seemed to be most suitable for vehicle implementation mainly due to better results in the simulation environment. In addition to this, by using absolute slip $\Delta v$ a couple of other practical problems could be handled in a smoother way. For instance, the normalised slip becomes undefined when the vehicle speed is zero and very noisy at low speeds.

The controller was bench marketed against a DSA, the existing anti-slip system implemented in the Volvo S/V40-series.

**[Full Throttle Take-off]**

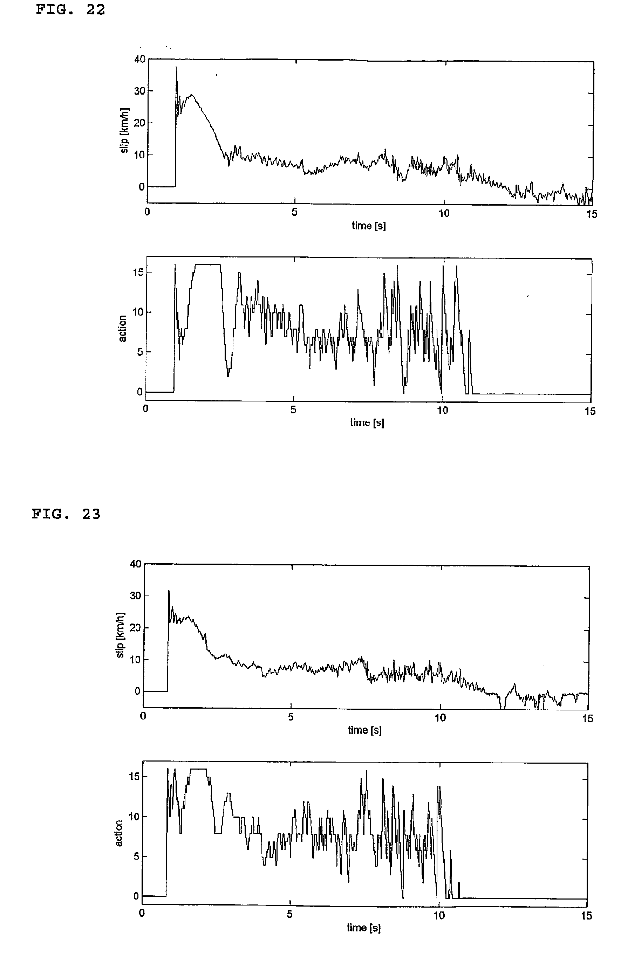

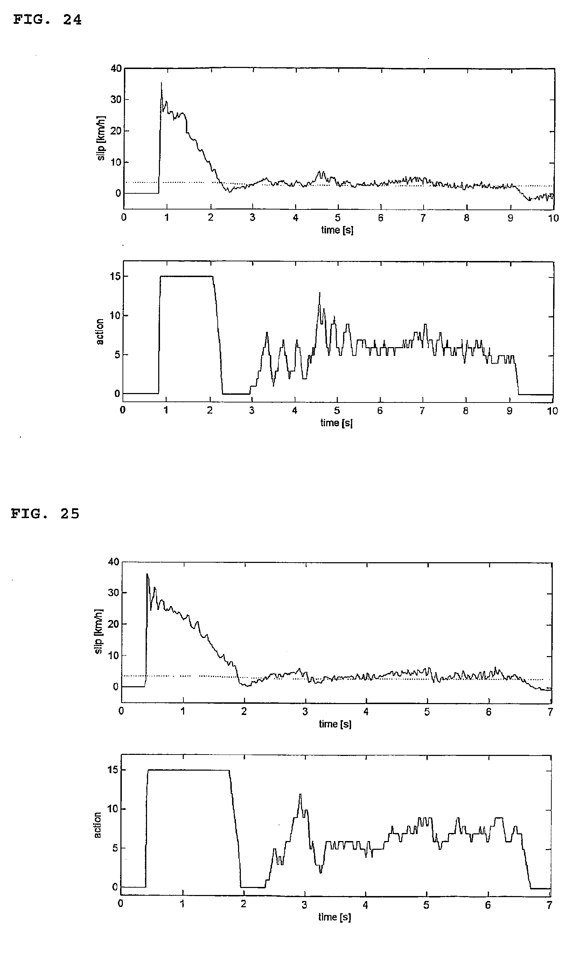

From an initial engine speed of 3000 RPM, a hard take-off was performed at full throttle in first gear. The results are presented in FIG. 22 and FIG. 23 for DSA and FIG. 24 and FIG.25 for NSC 2.

**[Acceleration]**

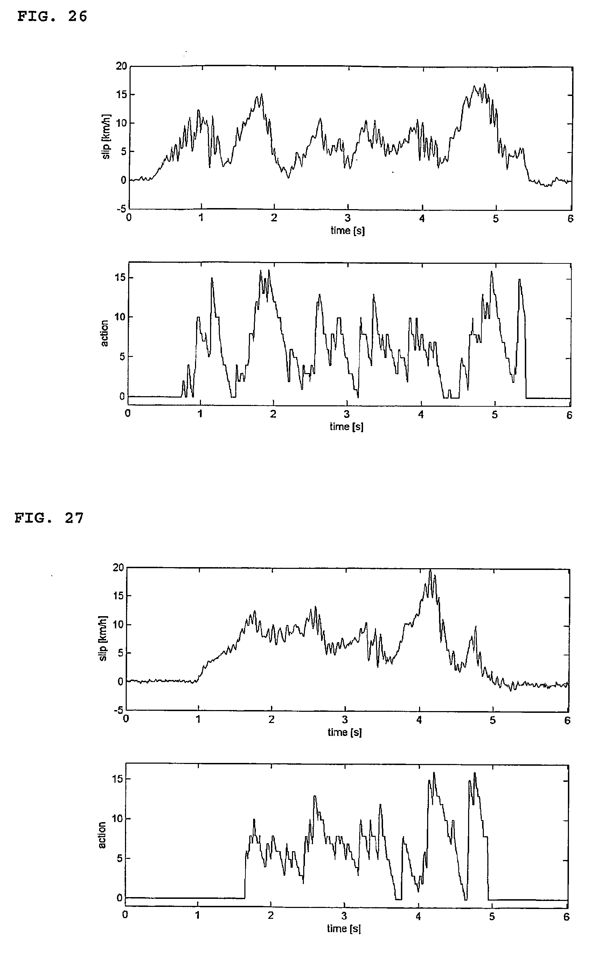

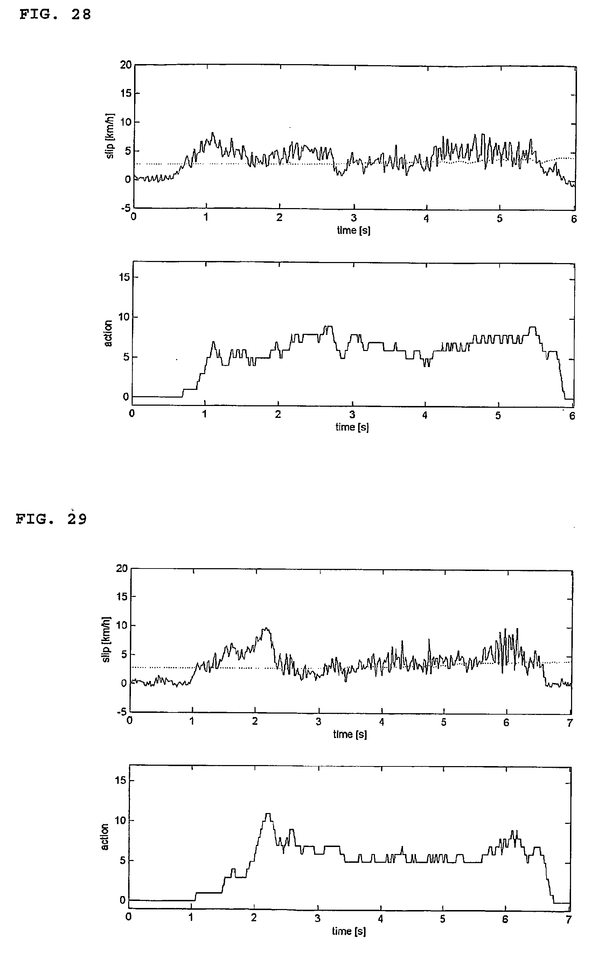

The car was slowly brought to an initial speed of 30 km/h in second gear. The data logging was started and full throttle acceleration was performed up to 60 km/h. The results are presented in FIG. 26 and FIG. 27 for DSA and FIG. 28 and FIG. 29 for NSC 2.

[Cornering]

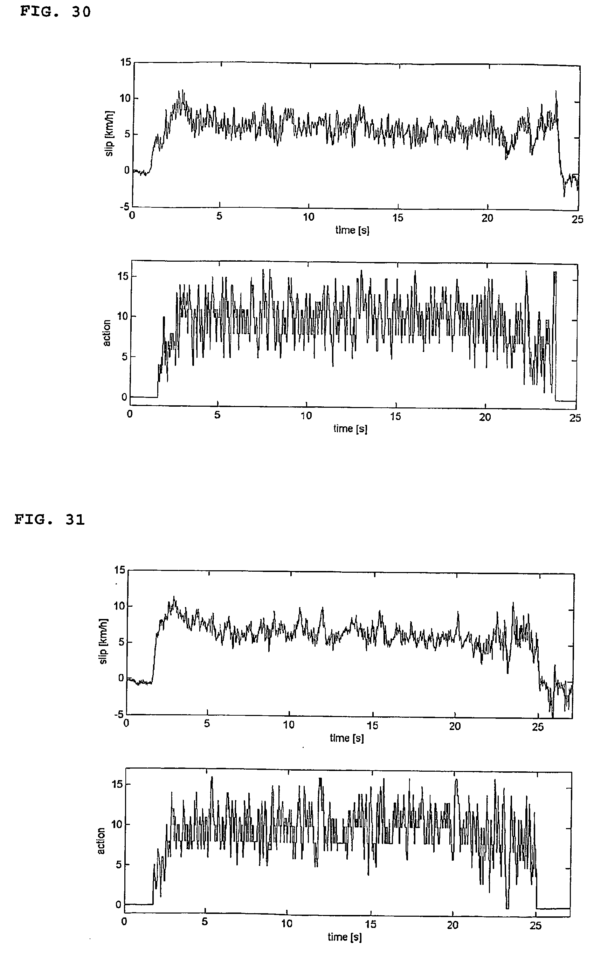

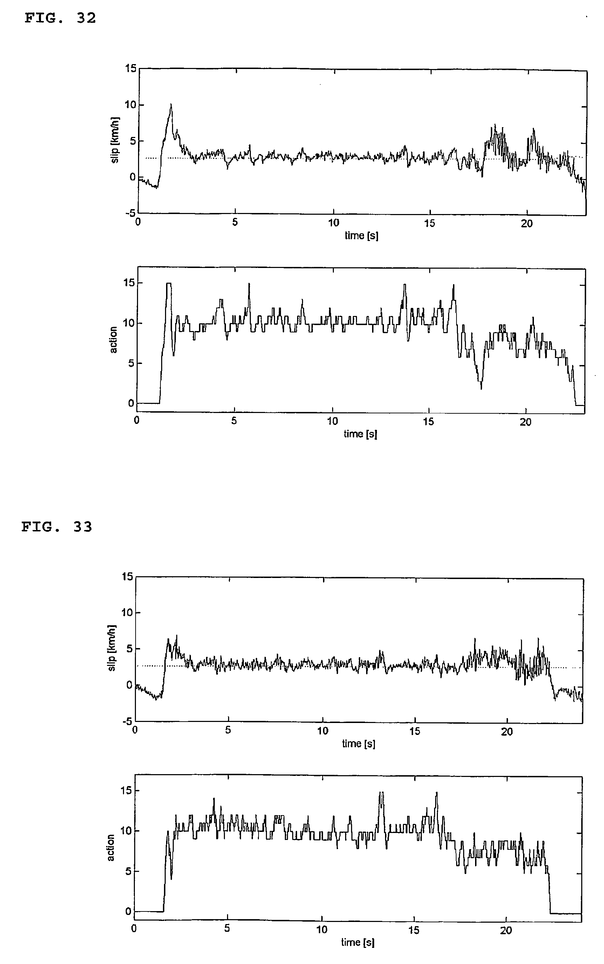

The car was slowly brought to an initial speed of 20 km/h in first gear. The accelerator was fully released and the steering wheel was turned to its maximum angle. Then the data logging was started and the accelerator was pressed to full throttle while the car completed two turns in a circular path. After the two complete turns, the car was straightened up and accelerated at full throttle to an engine speed of ~5000 RPM. The results are presented in FIG. 30 and FIG. 31 for DSA and FIG. 32 and FIG. 33 for NSC 2.

[Acceleration Lane]

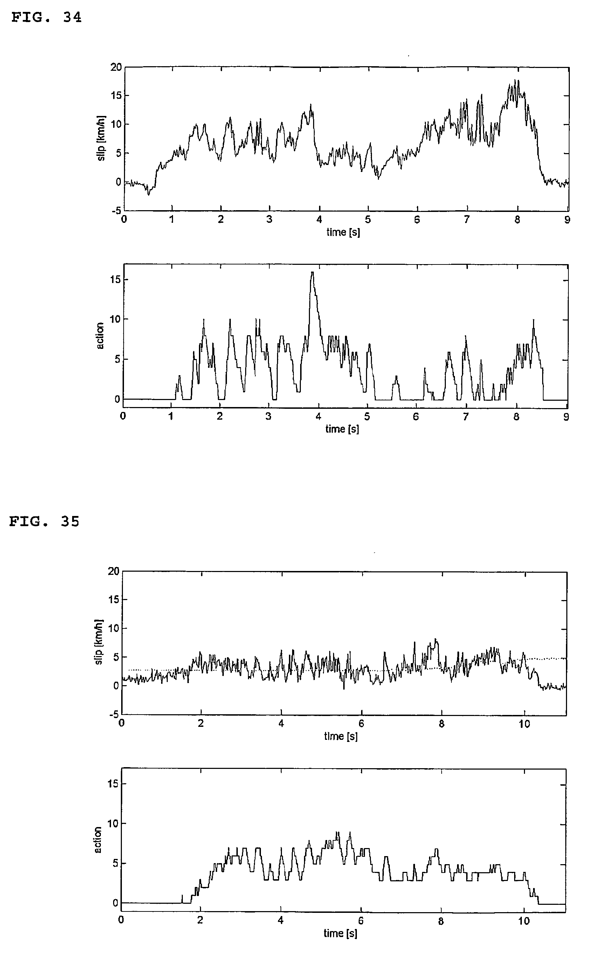

An attempt was made to imitate a more realistic driving scenario when the vehicle is accelerating through a long curve, such as an acceleration lane for entering a highway. The vehicle was driven at full throttle in third gear. This test was difficult to repeat in exactly the same manner for the two controllers so the two test runs are not completely comparable. The results are presented in FIG. 34 for DSA and FIG. 35 for NSC 2.

**[Summary of test results]**

When evaluating the performance of anti-slip systems there a advantageously separate issues to consider, comprising how the actual slip behaves and how the driver experiences the vehicles behaviour.

From the measured test results it seems that the controller according to the embodiment maintains a smooth slip value with less oscillating behaviour than DSA. In addition to this, the control signal also shows a smoother behaviour, which is preferable if the controller should have to use another torque reduction method such as throttle- and/or ignition angle control.

However, the real test for anti-slip system is how the driver experiences them. When driving, DSA is experienced as slightly smother than the presented controller. This is probably due to the fact that DSA uses a higher slip reference value than the presented controller. At high slip levels, the difference in vehicle acceleration is small for oscillating slip while it become larger when the slip is kept at the slip slope. However, a high reference value tends to prioritise traction over side stability and also increase wear on the tires so here a trade-off has to be made.

**[Second System Embodiment]**

Note, that in the embodiment described hereinafter, the slip $\lambda$ is denoted by $s$ and the transfer function G(s) by G(p).

**[Outline of the controller structure]**

For the sake of simplicity, we will here repeat the basic dynamic equations assuming a one-wheeled vehicle. The vehicle specific details for cars and motorcycles will be presented hereinafter.

Assume that this vehicle has mass $\mu$, normal force $F_z$ and the wheel has moment of inertia $J$ and radius $r$. The basic dynamic equations of motion are:

$$m\dot{v}_x = F_z \mu_x(s)$$

$$J\dot{\omega} = r F_z \mu_x(s) + T_{traction} - T_{brake}$$

Here $\mu_x(s)$ is the normalised traction force $F_x/F_z$. The slip definition is as given in the above embodiment (see equation 13). This static relation works fine for our purposes. The knowledge of the $\mu$ relation is critical as noted above. The principal form of this relation is shown in FIG. 10 and the best possible friction is attained for the slip yielding the peak value of this curve. The basic control strategy is to reduce the engine torque and thus $\mu_x$ so as to never pass the peak value.

This gives the dynamics for the slip as

$$\dot{s} = \frac{\omega r}{v_x}\dot{\omega} - \frac{\omega r}{v_x^2}\dot{v}_x$$
$$= \frac{\omega r}{J v_x}\left(r F_z \mu_x(s, \mu_0) + T_{traction} - T_{brake}\right) - \frac{\omega r}{m v_x^2} F_z \mu_x(s, \mu_0)$$

That is, each tire is modelled as a first order non-linear ordinary differential equation. Standard control techniques apply on linear differential equations, and the approach that will be taken is to use a robust controller on the linearised dynamics. This involves computing a linear relation $\mu_x(s) + \mu_x'(s_0)\,(s - s_0)$ around the current working point $s_0$.

A driveline model from the engine torque reduction signal to the tire force $T_{traction}$ similar to the above embodiment can be taken as

$$T_{\text{traction}} = G(p) \, T_{\text{engine}}$$

where $G(p)$ is a linear transfer function as described in detail in the above embodiment, here expressed in the differentiating operator $p$. We will assume that a torque reduction algorithm is given,

$$T_{\text{engine}} = \min(u, 1) \, T_{\text{commanded}}, \quad u > 0,$$

where $u$ is the reduction factor (could be discrete). The minimum operator is included so that the controller can be active all the time and normally strives to increase the engine torque ($u > 1$) so that the slip would approach its reference value. Common principles for torque reduction include controlling the throttle or ignition angle or to use fuel blocking.

A part of the algorithm is a fast model-based friction estimator. Other intended features is a cascade control similarly to the above embodiment where the inner loop controls each individual wheel slip to a reference value, and the outer loop determines a suitable reference value yielding a constant safety margin during cornering.

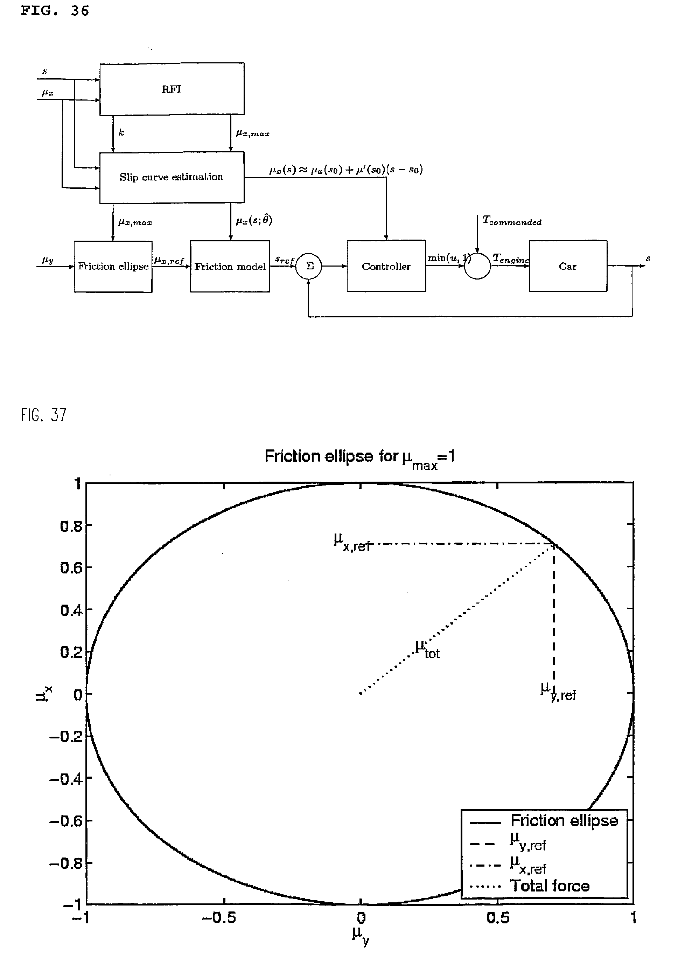

An alternative structure of the controller, as illustrated in FIG. 36 is as follows:

- An optional friction detector/estimator is run all the time. It provides an estimate of the maximal utilizable friction force $\mu_{\text{max}}$ and the initial slope $k$ of the slip curve. This algorithm will be referred to as RFI (Road Friction Indicator).

- Whenever the traction (or braking) force gives a slip larger than a threshold value, the slip curve estimator is enabled, preferably using $\mu_{\text{max}}$ and $k$ from RFI for initialisation. A good initialisation prevents divergence problems and speeds up convergence.

- The friction ellipse describes how the total friction force can be split up between lateral and longitudinal force, see FIG. 37. Here it is a circle with radius 1 indicating perfect friction, but for slippery roads and also considering a certain safety margin, the radius must be decreased accordingly. For a given lateral acceleration $\mu_y$, the maximum longitudinal force $\mu_{x,\text{ref}}$, given the friction and safety margin, can be computed. For MASC, it is used to compute how much of the utilizable force that is left for traction, taking the driver commanded steering into account. The lateral acceleration is taken either from an accelerometer or computed from the steering wheel angle or the wheel speed signal, or finally using a combination of several principles in a Kalman filter. The output is a suitable longitudinal reference value of longitudinal normalised traction force, $\mu_{x,\text{ref}}$.

- An on-line estimated friction curve $\mu_x(s)$ is estimated. Here the peak value is most important. From this, the reference longitudinal force $\mu_{x,\text{ref}}$ is mapped to a reference slip $s_{\text{ref}}$.

- A closed loop controller change computes a suitable engine torque to make each wheel slip equal to the reference value. The control signal $u$ can be thought of as the engine torque reduction factor, since the commanded torque will never be increased of course. The reason for computing $u > 0$ and then limiting it to $\min(u,1)$ is to be able to use standard linear control design and to avoid non-linear switches inside the controller.

**[Non linear friction model]**

Crucial for the performance is the knowledge of the $\mu$-$s$ relation, defined by the slip curve $\mu_x(s)$. We will start with defining useful properties of the model structure that is used in the estimation, and then examine some adaptive filters and their performance on simulated and real data. We assume that the model structure can be expressed in the form $\mu_x(s;\theta)$, where $\theta$ denotes the free parameters.

[Model requirements]

Before listing wanted properties on the model structure, some reflections on the curves in FIG. 10 are appropriate. The most characteristic properties for such curves are:

- The initial slope $k = d\mu_x(s)/ds$, for $s = 0$.
  In our case, $k$ can be assumed *a priori* from the RFI algorithm, while in the classical interpretation, it is a tire property not changing much over time.

- The maximum utilizable friction force $\mu_{max} = \max_s \mu_x(s)$. From the RFI algorithm we have an initial value for estimation as either high $\mu_{max} = 0.7$, say) or low $\mu_{max} = 0.2$, say).

- The slip for which the maximum utilizable friction force is obtained, $s_{max} = \arg\max_s \mu_x(s)$. A common value of $s_{max}$ in practice is 0.15.

- The stationary utilizable friction force

$$\mu_\infty = \lim_{s\to\infty} \mu_x(s).$$

These are perhaps the most important characteristics of the $\mu_x(s)$ curve. Note that feasible values of these parameters are given by the *open box*

$$0 \le k,$$

$$0 \le \mu_{max} \le 1,$$

$$0 \le s_{max} \le \infty,$$

$$0 \le \mu_\infty \le 1.$$

For other values, the corresponding curve does not correspond to physical prior knowledge of friction. The vector ($k$, $\mu_{max}$, $s_{max}$, $\mu_\infty$) will be referred to as the *physical parameters*. We will look for model structures which have four parameters in $\theta$, so we can interpret the result in terms of the physical parameters. There are many advantages of this, which will be pointed out.

The most important properties on a model structure to be a good candidate for on-line estimation are the following ones:

**P1** Flexibility. A large class of empirical relations should be able to be approximated well by adjusting the parameter values.

**P2** The parameters $\theta$ should be simple to relate to the following physical parameters. There are two motives for a simple relation between $\theta$ and ($k$, $\mu_{max}$, $s_{max}$, $\mu_\infty$):

**P2a** Initialisation of the adaptive algorithm is greatly simplified if there is a simple relation $\theta = f(k, \mu_{max}, s_{max})$:
**P2b** Feasibility projection. The function $\mu_x(s;\theta)$ must of course correspond to a feasible slip curve. If there is an explicit transformation ($k$, $\mu_{max}$, $s_{max}$, $\mu_\infty$) = $g(\theta)$, then it is simple to constrain the parameters so that the physical parameters belong to the open box defined above. Furthermore, it simplifies if the feasibility region for $\theta$ has a simple form, preferably without non-linear couplings between the parameters.

**P3** Differentiability with respect to $s$. The adaptive slip controller is a function of $d\mu_x(s)/ds$, which thus must be computed in the controller design.

**P4** Enabling efficient identification. The best model structure in this respect is one which is linear in the parameters. The next best model structure is one which is differentiable in the parameters enabling gradient based adaptive algorithms. For gradient based algorithms, the Hessian should be as diagonal as possible, which practically means that the parameters should be as decoupled as possible.

**[CARMA model]**

We here examine a structure which is linear in the parameters. The step response of a second order Continuous time Auto-Regressive Moving Average (CARMA) model, as often used in control theory, has a similar shape as the slip curve. Think of slip as 'time' here. In the 'time' domain, the step response is

$$\mu_x(s) = (k + \bar{k})s_1(1 - e^{-s/s_1}) - \bar{k}s_2(1 - e^{-s/s_2}).$$

A non-minimum phase zero causes an overshoot in the step response, which models the peak of the slip curve. One advantage of using model structures borrowed from control theory, is that standard system identification algorithms may be used. For instance, the *pem* function of the system identification toolbox might be modified to "non-causal" sampling. This particular parametrisation gives (**P3**)

$$\mu'(s) = (k + \bar{k})e^{-s/s_1} - \bar{k}e^{-s/s_2},$$

from which we compute the physical parameters

$$\mu'(0) = k$$

$$\mu_x(\infty) = (k + \bar{k})s_1 - \bar{k}s_2$$

$$s_{max} = \frac{1}{\frac{1}{s_1} - \frac{1}{s_2}} \log\left(1 + \frac{k}{\bar{k}}\right)$$

$$\mu_{max} = (k + \bar{k})s_1 \left(1 - e^{-\frac{\log\left(1 + \frac{k}{\bar{k}}\right)}{1 - \frac{s_1}{s_2}}}\right) - \bar{k}s_2 \left(1 - e^{-\frac{\log\left(1 + \frac{k}{\bar{k}}\right)}{\frac{s_2}{s_1} - 1}}\right) \frac{1}{\frac{1}{s_1} - \frac{1}{s_2}}$$

This means that **P2b** is complied. Unfortunately, the feasibility region is hard to determine and there does not seem to be an explicit inverse, so **P2a** is not satisfied. The parameter gradient **P4** has a quite simple form, enabling computationally simple adaptive algorithms.

**[The peak parametrised model]**

The second proposal is directly parametrised in the peak parameters ($\mu_{max}$, $s_{max}$),

$$\mu_x(s) = \mu_{max} \left(1 - \left|\frac{(1 + r)s}{s + rs_{max}} - 1\right|^n\right).$$

The expression inside the absolute sign is positive when $s > s_{max}$ and negative otherwise.

Assume first, for simplicity, that $n$ is constrained to be even. The derivative is then given by

$$\mu'(s) = -n\mu_{max}\left(\frac{1+r}{s+rs_{max}} - \frac{(1+r)s}{(s+rs_{max})^2}\right)\left(\frac{(1+r)s}{s+rs_{max}} - 1\right)^{n-1}$$

The physical parameters can be computed as

$$\mu'_x(0) = \frac{\mu_{max}}{s_{max}}n\frac{1+r}{r}$$

$$\mu_x(\infty) = \mu_{max}(1 - r^n)$$

$$s_{max} = s_{max}$$

$$\mu_{max} = \mu_{max}.$$

Note that the straight line between the origin and the peak has slope $\mu_{max}/s_{max}$. The factor $n(1+r)/r$ is thus the excessive slope, and by feasibility this must be larger than one so we must have $n > r/(1+r)$. From the expression for $\mu_{max}$, we interpret $r^n$ as the peak excess, compared to the stationary value. We must have $r \le 1$, so the feasibility region is a unit cube for $(\mu_{max}, s_{max}, r)$. To summarize, we should design the adaptive filter to guarantee that

$$0 \le r \le 1,$$

$$0 \le \mu_{max} \le 1,$$

$$0 \le s_{max} \le 1,$$

$$0 \le n \le \frac{r}{1+r}.$$

One drawback with this model is the non-linear coupling between $(n,r)$ and $(k,\mu_\infty)$, which are influencing different parts of the slip curve. That is, property **P4** might not be perfectly satisfied here.

**[Adaptive slip curve estimation]**

[Adaptive algorithm]

The perhaps simplest possible adaptive algorithm for the peak model is a stochastic gradient algorithm:

$$\hat{\theta}_{t+1} = \hat{\theta}_t - \alpha \left.\frac{d\mu_x(s;\theta)}{d\theta}\right|_{\theta=\hat{\theta}_t} (\mu_t - \mu_x(s_t;\hat{\theta}_t)).$$

Here a is a step size to be chosen. The algorithm should only be run when the slip is larger than a certain threshold value, say $s > 0.05$, to avoid excitation problem. For small slip values, only the slope is identifiable. At each iteration, the update is accepted only if each updated parameter belongs to the feasibility region. Instead of computing the analytical gradient, it might simplify to use a numerical gradient.

[Simulation results]

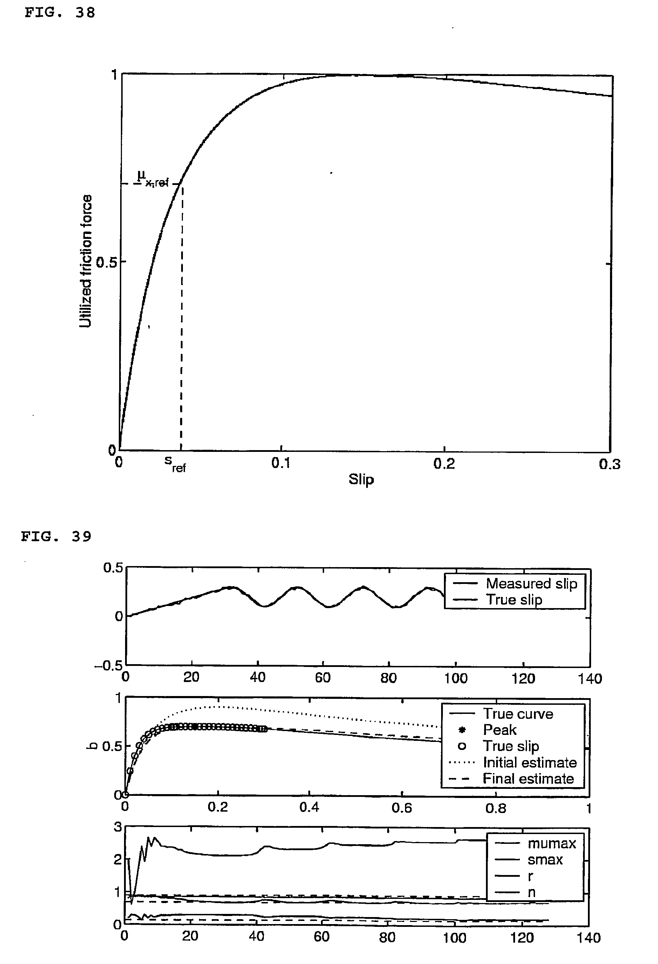

The performance of the numerical gradient algorithm is here investigated on simulated data. The system is assumed to be in closed loop, so the slip is cyclically swept over the peak value, here according to a sine wave after an initial ramp, as shown in the first diagram in FIG. 39. The second diagram shows how an initial guess converges to the true curve, and the last diagram shows how the parameters converge.

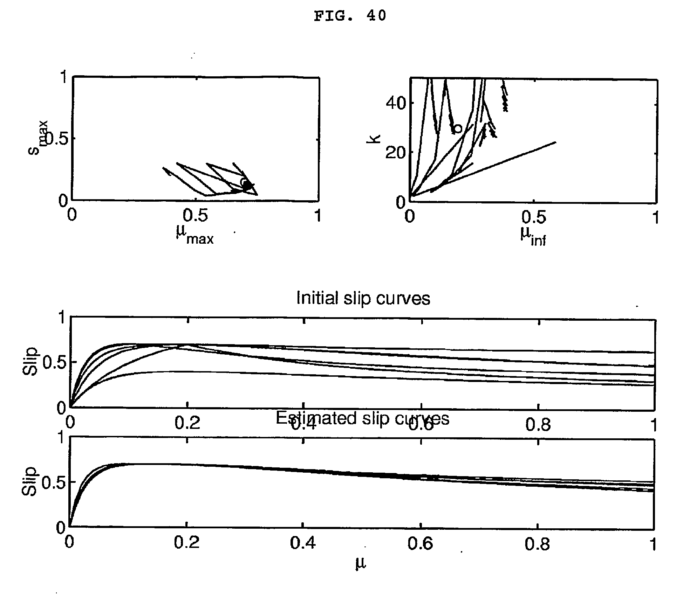

FIG. 40 shows how the algorithm handles different initial conditions. Most important is to compare the second last diagram to the final estimated slip curves in the last diagram.

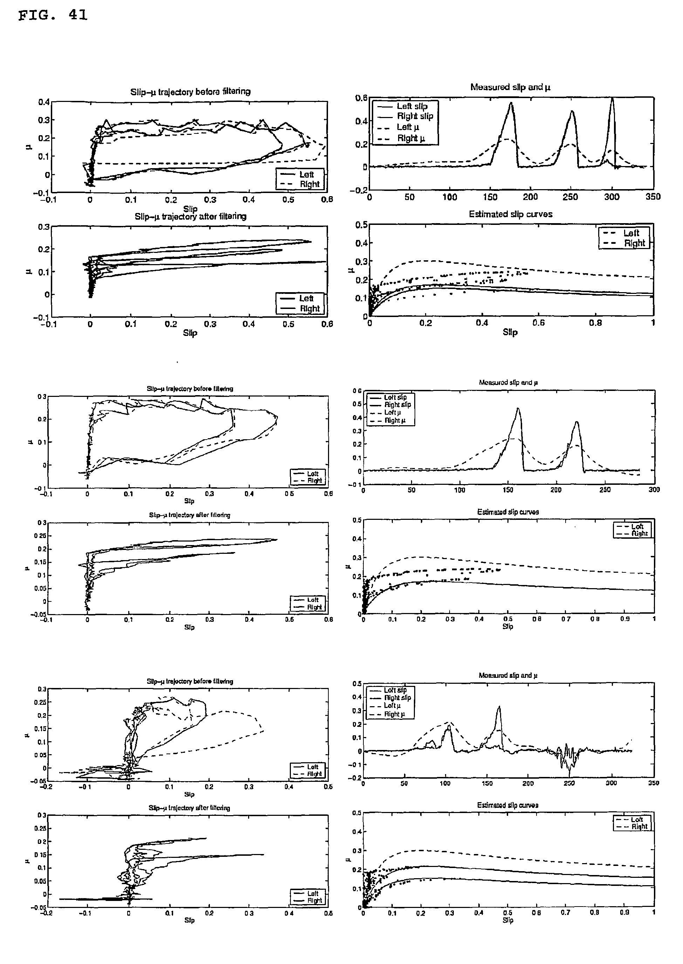

The left diagram of FIG. 41 shows the trajectory for $s$ and $\mu$ on left and right driven wheel, respectively, during a drive with fully developed spin. First subdiagram for static data, and second subdiagram for LP-filtered $\mu$. Right diagrams show time diagrams of $s$ and $\mu$ and estimated slip curve. Three different test drives are compared in the different rows.

**[Other Embodiments]**

Here some other embodiments of aspects of the invention are presented.

[Controller using internal states]

If absolute slip $\Delta v$ is used and air resistance is neglected it is possible to set up a linear model for the vehicle with the states $x_1 = T_e$, $x_2 = \omega_e$, $x3 = \omega_w$, $x4 = \Delta\varphi$ and $x5 = v_x$. A $H_2$- or $H_\infty$-controller could be based on this system. However, such a controller would demand a quite extensive estimator (e.g. Kalman filter) to keep track over the non-measurable states, $T_e$, and $\Delta\varphi$. The vehicle load could then be estimated.

$$\dot{x} = Ax + Bu + Mv \quad \text{with } u = T_{reg} \text{ and } v = F_{load} \quad (57)$$

$$A = \begin{vmatrix} -\dfrac{1}{t_e} & 0 & 0 & 0 & 0 \\[2mm] \dfrac{1}{J_e} & -\dfrac{d_{ds}}{J_e} & \dfrac{d_{ds}}{J_e} & -\dfrac{k_{ds}}{J_e} & 0 \\[2mm] 0 & \dfrac{d_{ds}}{J_w} & -\dfrac{d_{ds}}{J_w} - \dfrac{k_{abs}r_w}{J_w} & \dfrac{k_{ds}}{J_w} & \dfrac{-k_{abs}}{J_w} \\[2mm] 0 & -\dfrac{1}{i} & -1 & 0 & 0 \\[2mm] 0 & 0 & \dfrac{k_{abs}r_w}{m} & 0 & \dfrac{-k_{abs}}{m} \end{vmatrix}, \quad B = \begin{vmatrix} \dfrac{1}{J_e} \\ 0 \\ 0 \\ 0 \\ 0 \end{vmatrix}, \quad M = \begin{vmatrix} 0 \\ 0 \\ 0 \\ 0 \\ -1 \end{vmatrix} \quad (58)$$

**[RPM Control]**

One problem in slip control is the influence from the dynamic properties of the driveline. The problem consists of the fact that the controlled entity (the slip) is situated "far away" from the actuator (the engine) and oscillations from the driveline will have a negative effect on the stability of the system if not correctly modelled. In addition to this the slip-signal will be quite noisy while the RPM signal is quite "clean" in comparison. If the engine speed (RPM) was controlled instead of the wheel speed those problems could be avoided. However, other problems arise such as the reference value calculation that will become highly gear ratio dependent and how to handle driving cases with active use of the clutch.

**[MISCELLANEOUS]**

According to an exemplified embodiment of the invention, the model based anti-slip system may be any machine capable of executing a sequence of instructions that specify actions to be taken by that machine for causing the machine to perform any one of the methodologies discussed above. The machine may be an application specified integrated circuit (ASIC) including a processor and a memory unit. The instructions may reside, completely or at least partially, within the memory and/or within the processor.

In particular, the model based anti-slip system may be implemented in the form of a computer system within which a sequence of instructions may be executed. The computer system may then further include a video display unit, an alpha-numeric input device (e.g. a keyboard), a cursor control device (e.g. a mouse), a disk drive unit. The disk drive unit includes a machine-readable medium on which is stored the sequence of instructions (i.e., a computer program or software) embodying any one, or all, of the methodologies described above.

The computer program product may be a machine-readable medium which is capable of storing or encoding the sequence of instructions for execution by the machine and that cause the machine to perform any one of the methodologies of the present invention. The machine-readable medium shall accordingly be taken to include, but not be limited to, solid-state memories, optical and magnetic disks, and carrier wave signals.

In the above description, for simplification, it is mostly referred to the method case. The system case can be easily derived from the latter one by replacing at the appropriate places in the description the expression 'step' for the method case by the expression 'component' for the system case.

Furthermore, all other publications and existing systems mentioned in this specification are herein incorporated by reference.

Although certain methods, systems and products constructed in accordance with the teachings of the invention have been described herein, the scope of coverage of this patent is not limited thereto. Particularly, the Volvo V40 T4 environment serves solely as an exemplifying embodiment of the present invention. It is explicitly pointed out that the invention is in no respect limited to this particular vehicle environment. On the contrary, this patent covers all embodiments of the teachings of the invention fairly falling within the scope of the appended claims.

**Claims**

**1.** A method for controlling the wheel slip ($\lambda$) of at least one wheel on a vehicle, comprising the steps of:

- obtaining at least one dynamical state parameter of the vehicle,
- adaptively estimating parameters of a parametric slip-friction force model of the vehicle,
- determining (G(s)) a slip reference value indicative of the wheel slip at a determined driveline torque from a dynamic model of the relevant vehicle components which comprises the adaptive parametric slip-friction force model, and
- controlling (R(s)) the driveline torque ($T_s$) of the vehicle by determining a torque manipulation signal based on the dynamical state parameters and the slip reference value.

**2.** The method of claim 1, wherein the model-based calculation is based on a vehicle model, comprising at least one of

- an engine model,
- a dynamic model of the driveline for estimating forces in the tires' contact path, and
- a tire-road contact model.

**3.** The method of claim 2, wherein that the tire-road contact model comprises a slip-friction force model resulting in a slip curve indicative of the respective road characteristics.

**4.** The method of claim 3 wherein the slip-friction model is a linear model.

**5.** The method of claim 3, wherein the slip-friction force model is non-linear.

**6.** The method of claim 3, wherein the slip-friction model is defined by the following formulas:

$$\mu(\lambda) = \begin{cases} k_{slip}\lambda & if \quad \lambda \le \lambda_{max} \\ k_{slip}\lambda_{max} & if \quad \lambda \ge \lambda_{max} \end{cases} , \qquad (\text{eq. 18})$$

$$F_{trac} = \mu(\lambda)F_z , \qquad\qquad (\text{eq. 19})$$

where $\mu$ is a friction value, $\lambda$ is a slip value, $k_{slip}$ is a slip slope, $\lambda_{max}$ is a maximal slip value, $F_{trac}$ is a longitudinal traction force and $F_z$ is a vertical load on a wheel.

**7.** The method of claim 5, wherein the non-linear slip-friction model is a Continuos time Auto-Regressive Moving Average model (CARMA).

**8.** The method of claim 5, wherein the non-linear slip-friction model is a peak parametrised model.

**9.** The method of anyone of claims 3-8, further comprising a step for friction estimation (RFI), which provides an estimate of the maximal utilizable friction force ($\mu_{max}$) and the initial slope ($k$) of the (current) slip curve, which can be used as input parameter for the slip-friction force model.

**10.** The method of anyone of claims 3-9, wherein the slip reference value is calculated according to the slip-friction force model by an adaptive filter.

**11.** The method of claim 10, wherein the adaptive filter is a Kalman filter.

**12.** The method of anyone of the preceding claims, wherein the torque control is achieved by fuel blocking.

**13.** The method of claim 12, **characterised in that** the fuel blocking comprises a cascade control structure.

**14.** The method of anyone of the preceding claims, wherein the torque control is achieved by controlling the throttle angle.

**15.** The method of anyone of the preceding claims, wherein the torque control is achieved by controlling the ignition angle.

**16.** The method of anyone of the preceding claims, wherein the torque control is achieved by controlling the wheel breaks.

**17.** The method of anyone of the preceding claims, wherein the dynamical state parameters comprise at least one wheel speed parameter ($\omega_w$)

**18.** The method of claim 17, wherein the wheel speed parameter ($\omega_w$) is obtained by an anti-locking system (ABS).

**19.** The method of anyone of the preceding claims, wherein the dynamical state parameters comprise an engine torque parameter ($T_{eng}$).

**20.** The method of anyone of the preceding claims, wherein the dynamical state parameters comprise a vehicle velocity parameter ($v_x$).

**21.** The method of anyone of the preceding claims, wherein the dynamical state parameters comprise a slip curve slope parameter ($k_{slip}$).

**22.** The method of anyone of the preceding claims, wherein the slip reference value depends on the vehicle's lateral forces.

23. A method for determining the traction force ($F_{trac}$) of a tire on a vehicle, in particular in combination with one of the preceding methods, based on a slip-friction model according to the formula

$$F_{trac} = \mu(\lambda)F_z \, , \qquad\qquad \text{(eq. 19)}$$

where $\mu$ is a friction value, $\lambda$ is a tire slip value, $F_{trac}$ is a traction force, $F_z$ is the vertical load on a wheel and $\mu(\lambda)$ is a slip curve according to the slip-friction model.

24. The method of claim 23, wherein the non-linear slip-friction model is a Continuos time Auto-Regressive Moving Average model (CARMA).

25. The method of claim 23, wherein the non-linear slip-friction model is a peak parametrised model.

26. The method of anyone of claims 23-25, wherein the slip reference value is calculated according to the slip-friction force model by an adaptive filter.

27. The method of claim 26, wherein the adaptive filter is a Kalman filter.

28. A system for controlling the wheel slip ($\lambda$) of at least one wheel on a vehicle, comprising:

    - a device for obtaining at least one dynamical state parameter of the vehicle,
    - a device for adaptively estimating parameters of a parametric slip-friction force model of the vehicle,
    - a device (G(s)) for determining a slip reference value indicative of the wheel slip at a determined driveline torque from a dynamic model of the relevant vehicle components which comprises the adaptive parametric slip-friction force model, and
    - a device (R(s)) for controlling the driveline torque ($T_s$) of the vehicle by determining a torque manipulation signal based on the dynamical state parameters and the slip reference value.

29. A computer program product including program code for carrying out a digital signal processing method, when executed on a computer system, for controlling the wheel slip ($\lambda$) of at least one wheel on a vehicle, comprising:

    - obtaining at least one dynamical state parameter of the vehicle,
    - adaptively estimating parameters of a parametric slip-friction force model of the vehicle,
    - determining (G(s)) a slip reference value indicative of the wheel slip at a determined driveline torque from a dynamic model of the relevant vehicle components which comprises the adaptive parametric slip-friction force model, and
    - controlling (R(s)) the driveline torque ($T_s$) of the vehicle by determining a torque manipulation signal based on the dynamical state parameters and the slip reference value.

**Patentansprüche**

1. Verfahren zur Steuerung des Radschlupfes ($\lambda$) von wenigstens einem Rad eines Fahrzeugs, das folgende Schritte aufweist:

    - Erfassen wenigstens eines dynamischen Zustandsparameters des Fahrzeugs,
    - adaptives Schätzen von Parametern eines parametrischen Schlupf-Reibungskraft-Modells des Fahrzeugs,
    - Bestimmen (*G(s)*) eines Schlupfreferenzwerts, der den Radschlupf bei einem bestimmten Antriebsmoment angibt, aus einem dynamischen Modell der relevanten Fahrzeugkomponenten, welches das adaptive parametrische Schlupf-Reibungskraft-Modell umfasst, und
    - Steuern (*R(s)*) des Antriebsmoments ($T_s$) des Fahrzeugs durch Bestimmen eines Moment-Manipulationssignals basierend auf den dynamischen Zustandsparametern und dem Schlupfreferenzwert.

2. Verfahren nach Anspruch 1, bei dem die modellbasierte Berechnung auf einem Fahrzeugmodell beruht, welches umfasst

    - ein Motorenmodell,
    - ein dynamisches Modell des Antriebsstrangs zum Abschätzen der Kräfte im Kontaktpfad der Reifen, oder
    - ein Reifen-Straße-Kontakt-Modell.

3. Verfahren nach Anspruch 2, bei dem das Reifen-Straße-Kontakt-Modell ein Schlupf-Reibungskraft-Modell umfasst, welches eine Schlupfkurve ergibt, die die entsprechenden Straßeneigenschaften angibt.

4. Verfahren nach Anspruch 3, bei dem das Schlupf-Reibungskraft-Modell ein lineares Modell ist.

5. Verfahren nach Anspruch 3, bei dem das Schlupf-Reibungskraft-Modell nicht-linear ist.

6. Verfahren nach Anspruch 3, bei dem das Schlupf-Reibungskraft-Modell durch folgende Formeln definiert ist:

$$\mu(\lambda) = \begin{cases} k_{slip}\lambda & if \quad \lambda \leq \lambda_{max} \\ k_{slip}\lambda_{max} & if \quad \lambda \geq \lambda_{max} \end{cases} , \qquad (eq.\ 18)$$

$$F_{trac} = \mu(\lambda)F_z , \qquad\qquad (eq.\ 19)$$

wobei $\mu$ ein Reibungswert ist, $\lambda$ ein Schlupfwert ist, $k_{slip}$ eine Schlupfsteigung ist, $\lambda_{max}$ ein maximaler Schlupfwert ist, $F_{trac}$ eine Längstriebkraft ist und $F_z$ eine vertikale Last auf einem Rad ist.

7. Verfahren nach Anspruch 5, bei dem das nicht-lineare Schlupf-Reibungskraft-Modell ein Continous-time-Auto-Regressive-Moving-Average-Modell (CARMA) ist.

8. Verfahren nach Anspruch 5, bei dem das nicht-lineare Schlupf-Reibungskraft-Modell ein Peak-parametrisiertes Modell ist.

9. Verfahren nach einem der Ansprüche 3 bis 8, das zudem einen Schritt der Reibungsabschätzung (RFI) aufweist, welcher eine Schätzung der maximalen nutzbaren Reibungskraft ($\mu_{max}$) und der initialen Steigung ($k$) der (momentanen) Schlupfkurve liefert, die als Eingangsparameter für das Schlupf-Reibungskraft-Modell verwendet werden können.

10. Verfahren nach einem der Ansprüche 3 bis 9, wobei der Schlupf-Referenzwert gemäß dem Schlupf-Reibungskraft-Modell mittels eines adaptiven Filters berechnet wird.

11. Verfahren nach Anspruch 10, wobei der adaptive Filter ein Kalman-Filter ist.

12. Verfahren nach einem der vorstehenden Ansprüche, wobei die Moment-Steuerung durch Treibstoffblockierung erreicht wird.

13. Verfahren nach Anspruch 12, **dadurch gekennzeichnet, dass** die Treibstoffblockierung eine Kaskadensteuerungsstruktur umfasst.

14. Verfahren nach einem der vorstehenden Ansprüche, wobei die Moment-Steuerung mittels Steuerung des Drosselklappenwinkels erreicht wird.

15. Verfahren nach einem der vorstehenden Ansprüche, wobei die Moment-Steuerung durch Steuerung des Zündwinkels erreicht wird.

**16.** Verfahren nach einem der vorstehenden Ansprüche, bei dem die Moment-Steuerung durch Steuerung der Radbremsen erreicht wird.

**17.** Verfahren nach einem der vorstehenden Ansprüche, wobei die dynamischen Zustandsparameter wenigstens einen Radgeschwindigkeitsparameter ($\omega_w$) umfassen.

**18.** Verfahren nach Anspruch 17, wobei der Radgeschwindigkeitsparameter ($\omega_w$) mittels eines Antiblockiersystems (ABS) erlangt wird.

**19.** Verfahren nach einem der vorstehenden Ansprüche, wobei die dynamischen Zustandsparameter einen Motorendrehmomentparameter ($T_{eng}$) umfassen.

**20.** Verfahren nach einem der vorstehenden Ansprüche, wobei die dynamischen Zustandsparameter einen Fahrzeuggeschwindigkeitsparameter ($v_x$) umfassen.

**21.** Verfahren nach einem der vorstehenden Ansprüche, wobei die dynamischen Zustandsparameter einen Schlupfkurven-Steigungsparameter ($k_{slip}$) umfassen.

**22.** Verfahren nach einem der vorstehenden Ansprüche, wobei der Schlupf-Referenzwert von den Lateralkräften des Fahrzeugs abhängig ist.

**23.** Verfahren zum Bestimmen der Antriebskraft ($F_{trac}$) eines Rades eines Fahrzeugs, insbesondere in Kombination mit einem der vorstehenden Ansprüche, basierend auf einem Schlupf-Reibungs-Modell gemäß der Formel

$$F_{trac} = \mu(\lambda)F_z \,, \qquad\qquad\qquad \text{(eq. 19)}$$

wobei $\mu$ ein Reibungswert ist, $\lambda$ ein Radschlupfwert ist, $F_{trac}$ eine Antriebskraft ist, $F_z$ eine vertikale Last auf einem Rad ist und $\mu(\lambda)$ eine Schlupfkurve gemäß des Schlupf-Reibungs-Modells ist.

**24.** Verfahren nach Anspruch 23, wobei das nicht-lineare Schlupf-Reibungs-Modell ein Continous-time-Auto-Regressive-Moving-Average-Modell (CARMA) ist.

**25.** Verfahren nach Anspruch 23, wobei das nicht-lineare Schlupf-Reibungsmodell ein Peak-parametrisiertes Modell ist.

**26.** Verfahren nach einem der Ansprüche 23 bis 25, wobei der Schlupfreferenzwert gemäß des Schlupf-Reibungskraft-Modells mittels eines adaptiven Filters berechnet wird.

**27.** Verfahren nach Anspruch 26, wobei der adaptive Filter ein Kalman-Filter ist.

**28.** System zum Steuern des Radschlupfes ($\lambda$) wenigstens eines Rades eines Fahrzeugs, umfassend:

  - eine Vorrichtung zum Erfassen wenigstens eines dynamischen Zustandsparameters des Fahrzeugs,
  - eine Vorrichtung zum adaptiven Abschätzen von Parametern eines parametrischen Schlupf-Reibungskraft-Modells des Fahrzeugs,
  - eine Vorrichtung ($G(s)$) zum Bestimmen eines Schlupfreferenzwerts, der den Radschlupf bei einem bestimmten Antriebsmoment angibt, auf Grundlage eines dynamischen Modells der relevanten Fahrzeugkomponenten, welches das adaptive parametrische Schlupf-Reibungskraft-Modell umfasst, und
  - eine Vorrichtung ($R(s)$) zum Steuern des Antriebsmoments ($T_s$) des Fahrzeugs durch Bestimmen eines Moment-Manipulationssignals basierend auf den dynamischen Zustandsparametern und dem Schlupfreferenzwert.

**29.** Computerprogrammprodukt umfassend Programmcode zum Ausführen eines Digitalsignalverarbeitungsverfahrens, das, wenn es auf einem Computersystem ausgerührt wird, den Radschlupf ($\lambda$) wenigstens eines Rades eines Fahrzeugs steuert, umfassend:

- Erfassen wenigstens eines dynamischen Zustandsparameters des Fahrzeugs,
- adaptives Abschätzen von Parametern eines parametrischen Schlupf-Reibungskraft-Modells des Fahrzeugs,
- Bestimmen (*G(s)*) eines Schlupfreferenzwerts, der den Radschlupf bei einem bestimmten Antriebsmoment angibt, auf Grundlage eines dynamischen Modells der relevanten Fahrzeugkomponenten, welches das adaptive parametrisches Schlupf-Reibungskraft-Modell umfasst, und
- Steuern (*R(s)*) des Antriebsmoments (*T$_s$*) des Fahrzeugs durch Bestimmen eines Moment-Manipulationssignals basierend auf den dynamischen Zustandsparametern und dem Schlupfreferenzwert.

**Revendications**

1. Procédé de régulation de patinage de roue (λ) d'au moins une roue sur un véhicule, comprenant les étapes consistant à :

   ■ obtenir au moins un paramètre d'état dynamique du véhicule,
   ■ estimer de manière adaptative les paramètres d'un modèle patinage-force de frottement paramétrique du véhicule,
   ■ déterminer (G(s)) une valeur de référence de patinage indicative du patinage de roue à un couple de ligne de conduite déterminé à partir d'un modèle dynamique des composants de véhicule appropriés qui comprend le modèle patinage-force de frottement paramétrique adaptatif, et
   ■ réguler (R(s)) le couple de ligne de conduite (*T$_s$*) du véhicule en déterminant un signal de manipulation de couple à partir de paramètres d'état dynamiques et de la valeur de référence de patinage.

2. Procédé selon la revendication 1, dans lequel le calcul basé sur le modèle est basé sur un modèle de véhicule, comprenant au moins l'un des éléments suivantes :

   ■ un modèle de moteur,
   ■ un modèle dynamique de ligne de conduite pour estimer les forces dans le chemin de contact des pneumatiques, et
   ■ un modèle de contact pneumatique-route.

3. Procédé selon la revendication 2, dans lequel le modèle de contact pneumatique-route comprend un modèle patinage-force de frottement entraînant une courbe de patinage indicative des caractéristiques de route respectives.

4. Procédé selon la revendication 3, dans lequel le modèle patinage-frottement est un modèle linéaire.

5. Procédé selon la revendication 3, dans lequel le modèle patinage-force de frottement est non linéaire.

6. Procédé selon la revendication 3, dans lequel le modèle patinage-frottement est défini par les formules suivantes :

$$\mu(\lambda)\begin{cases} k_{slip} \ \lambda \quad si \quad \lambda \leq \lambda_{max} \\ k_{slip} \ \lambda_{max} \quad si \quad \lambda \geq \lambda_{max} \end{cases}, \quad (\text{éq. } 18)$$

$$F_{trac} = \mu(\lambda) F_Z, \quad (\text{éq. } 19)$$

où μ est une valeur de frottement, λ est une valeur de patinage, $k_{slip}$ est une pente de patinage, $\lambda_{max}$ est une valeur de patinage maximale, $F_{trac}$ est une force de traction longitudinale et $F_z$ est une charge verticale sur une roue.

7. Procédé selon la revendication 5, dans lequel le modèle patinage-frottement non linéaire est un modèle de moyenne mobile autorégressive à temps continu (CARMA).

8. Procédé selon la revendication 5, dans lequel le modèle patinage-frottement non linéaire est un modèle paramétré de pic.

**EP 1 587 704 B1**

9. Procédé selon l'une quelconque des revendications 3 à 8, comprenant en outre l'étape pour l'estimation de frottement (RFI), qui donne une estimation de la force de frottement utilisable maximale ($\mu_{max}$) et de la pente initiale (k) de la courbe de patinage (actuelle) qui peut être utilisée comme paramètre d'entrée pour le modèle patinage-force de frottement.

10. Procédé selon l'une quelconque des revendications 3 à 9, dans lequel la valeur de référence de patinage est calculée selon le modèle patinage-force de frottement par un filtre adaptatif.

11. Procédé selon la revendication 10, dans lequel le filtre adaptatif est un filtre de Kalman.

12. Procédé selon l'une quelconque des revendications précédentes, dans lequel la régulation de couple est obtenue par blocage de carburant.

13. Procédé selon la revendication 12, **caractérisé en ce que** le blocage de carburant comprend une structure de régulation de cascade.

14. Procédé selon l'une quelconque des revendications précédentes, dans lequel la régulation de couple est obtenue par régulation de l'angle de papillon.

15. Procédé selon l'une quelconque des revendications précédentes, dans lequel la régulation de couple est obtenue par régulation de l'angle d'allumage.

16. Procédé selon l'une quelconque des revendications précédentes, dans lequel la régulation de couple est obtenue par régulation des freins de roue.

17. Procédé selon l'une quelconque des revendications précédentes, dans lequel les paramètres d'état dynamique comprennent au moins un paramètre de vitesse de roue ($\omega_w$).

18. Procédé selon la revendication 17, dans lequel le paramètre de vitesse de roue ($\omega_w$) est obtenu par un système de freinage antiblocage (ABS).

19. Procédé selon l'une quelconque des revendications précédentes, dans lequel les paramètres d'état dynamique comprennent un paramètre de couple moteur ($T_{eng}$).

20. Procédé selon l'une quelconque des revendications précédentes, dans lequel les paramètres d'état dynamique comprennent un paramètre de vitesse de véhicule ($v_x$).

21. Procédé selon l'une quelconque des revendications précédentes, dans lequel les paramètres d'état dynamique comprennent un paramètre de pente de courbe de patinage ($k_{slip}$).

22. Procédé selon l'une quelconque des revendications précédentes, dans lequel la valeur de référence de patinage dépend des forces latérales du véhicule.

23. Procédé de détermination de la force de traction ($F_{trac}$) d'un pneumatique sur un véhicule, en particulier en combinaison avec l'un des procédés précédents, à partir d'un modèle patinage-frottement selon la formule

$$F_{trac} = \mu(\lambda) F_z, \qquad (\text{éq. } 19)$$

où $\mu$ est une valeur de frottement, $\lambda$ est une valeur de patinage de pneumatique, $F_{trac}$ est une force de traction, $F_z$ est la charge verticale sur une roue et $\mu(\lambda)$ est une courbe de patinage selon le modèle patinage-frottement.

24. Procédé selon la revendication 23, dans lequel le modèle patinage-frottement non linéaire est un modèle de moyenne mobile autorégressive à temps continu (CARMA).

25. Procédé selon la revendication 23, dans lequel le modèle patinage-frottement non linéaire est un modèle paramétré de pic.

**35**

**26.** Procédé selon l'une quelconque des revendications 23 à 25, dans lequel la valeur de référence de patinage est calculée selon le modèle patinage-force de frottement par un filtre adaptatif.

**27.** Procédé selon la revendication 26, dans lequel le filtre adaptatif est un filtre de Kalman.

**28.** Système de régulation du patinage de roue ($\lambda$) d'au moins une roue sur un véhicule, comprenant :

■ un dispositif pour obtenir au moins un paramètre d'état dynamique du véhicule,
■ un dispositif pour estimer de manière adaptative les paramètres d'un modèle patinage-force de frottement paramétrique du véhicule,
■ un dispositif (G(s)) pour déterminer une valeur de référence de patinage indicative du patinage de roue à un couple de ligne de conduite déterminé à partir d'un modèle dynamique des composants de véhicule appropriés qui comprend le modèle patinage-force de frottement paramétrique adaptatif, et
■ un dispositif (R(s)) pour réguler le couple de ligne de conduite ($T_s$) du véhicule en déterminant un signal de manipulation de couple à partir des paramètres d'état dynamique et de la valeur de référence de patinage.

**29.** Produit de programme informatique comprenant du code de programme pour réaliser un procédé de traitement de signal numérique, lorsqu'il est exécuté sur un système informatique, pour réguler le patinage de roue ($\lambda$) d'au moins une roue sur un véhicule, comprenant :

■ l'obtention d'au moins un paramètre d'état dynamique du véhicule,
■ l'estimation adaptative des paramètres d'un modèle patinage-force de frottement paramétrique du véhicule,
■ la détermination (G(s)) d'une valeur de référence de patinage indicative du patinage de roue à un couple de ligne de conduite déterminé à partir d'un modèle dynamique des composants de véhicule appropriés qui comprend le modèle patinage-force de frottement paramétrique adaptatif, et
■ la régulation (R(s)) du couple de ligne de conduite ($T_s$) du véhicule en déterminant un signal de manipulation de couple à partir des paramètres d'état dynamique et de la valeur de référence de patinage.

FIG. 1

FIG. 2

FIG. 3

| Action | 1 | 2 | 3 | 4 | 5 | 6 | 7 | 8 | 9 | 10 | 11 | 12 | 13 | >13 |
|---|---|---|---|---|---|---|---|---|---|---|---|---|---|---|
| % of $T_{driver}$ | 80.5 | 70.1 | 60.1 | 55.1 | 48.0 | 42.0 | 36.0 | 31.1 | 22.5 | 15.0 | 10.7 | 4.8 | 1.0 | ~0 |

FIG. 4

| Action | Pattern | Action | Pattern |
|---|---|---|---|
| 1 | 1000 0000 0000 0000 | 9 | 1110 1010 1010 1010 |
| 2 | 1000 0000 1000 0000 | 10 | 1110 1010 1110 1010 |
| 3 | 1000 1000 1000 0000 | 11 | 1110 1110 1110 1010 |
| 4 | 1000 1000 1000 1000 | 12 | 1110 1110 1110 1110 |
| 5 | 1010 1000 1000 1000 | 13 | 1111 1110 1110 1110 |
| 6 | 1010 1000 1010 1000 | 14 | 1111 1110 1111 1110 |
| 7 | 1010 1010 1010 1000 | 15 | 1111 1111 1111 1110 |
| 8 | 1010 1010 1010 1010 | 16 | 1111 1111 1111 1111 |

FIG. 5

| Sample | Action | Pattern |
|---|---|---|
| 1 | 0 | 0000 0000 0000 0000 |
| 2 | 1 | 0 1000 0000 0000 0000 |
| 3 | 2 | 01 000 0000 1000 0000 |
| 4 | 3 | 010 00 1000 1000 0000 |
| 5 | 4 | 0100 0 1000 1000 1000 |
| 6 | 5 | 0100 0 1010 1000 1000 1000 |
| 7 | 6 | 0100 01010 1000 1010 1000 |
| 8 | 7 | 0100 010 1010 1010 1010 1000 |
| 9 | 8 | 0100 0101010 1010 1010 1010 |
| 10 | 7 | 0100 0101 0 1010 1010 1010 1000 |

38

FIG. 6

FIG. 7

FIG. 8

FIG. 9

FIG. 10

FIG. 11

FIG. 12

FIG. 13

FIG. 14

FIG. 15

FIG. 16

FIG. 17

FIG. 18

FIG. 19

FIG. 20

FIG. 21

FIG. 22

FIG. 23

FIG. 24

FIG. 25

FIG. 26

FIG. 27

FIG. 28

FIG. 29

**FIG. 30**

**FIG. 31**

FIG. 32

FIG. 33

FIG. 34

FIG. 35

FIG. 36

FIG. 37

Friction ellipse for $\mu_{max}=1$

FIG. 38

FIG. 39

FIG. 40

Initial slip curves

Estimated slip curves

FIG. 41

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- DE 3735673 A1

### Non-patent literature cited in the description

- **J.B. Heywood.** Internal Combustion Engine Fundamentals. McGraw-Hill International Editings, 1988
- **J. Fredriksson.** Nonlinear Model-based Control of Automotive Powertrain. *Ph.D. thesis,* 2002
- **J.Y. Wong.** Theory of Ground Vehicles. John Wiley & sons, 1993
- Tires, Suspension and Handling. **J. C. Dixon.** Society of Automotive Engineers. 1996
- **T. Glad ; L. Ljung.** *Reglerteori. Studentlitteratur,* 1997
- **T. Glad ; L. Ljung.** *Reglerteori. Studentlitteratur,* 1997